# EUROPEAN PATENT APPLICATION

(11) **EP 1 098 494 A1**
(43) Date of publication of application: **09.05.2001**
(21) Application number: 00925631.4
(22) Date of filing: 11.05.2000
(51) Int. Cl.: H04L 29/08

(54) **COMMUNICATION METHOD, COMMUNICATION SYSTEM AND ELECTRONIC DEVICE**

(30) Priority: 19.05.1999 JP 13896299
(71) Applicant: Sony Corporation, Tokyo 141-0001 (JP)
(72) Inventor: Iijima, Yuko Sony Corporation, Tokyo 141-0001 (JP)
(74) Representative: DeVile, Jonathan Mark
(86) International application number: JP0003034
(87) International publication number: WO0072551

(57) **Abstract**

When communication is performed between devices connected through a bus line in which plural types of communication speeds exist, after a predetermined packet is received by a specific device on the bus line, a communication speed of a response packet transmitted to a transmission source of the predetermined packet is set at a communication speed of the received predetermined packet, so that communication resources can be effectively utilized by taking advantage of capabilities of the devices connected to the bus line.

## Description

### TECHNICAL FIELD

The present invention relates to a communication method and an electronic device which are preferably applied when communication is performed between devices connected to each other through a bus line of, e.g., the IEEE1394 system.

### BACKGROUND ART

AV devices which can mutually transmit information to each other through a network using a communication control bus of the IEEE1394 system are developed. In the communication of the bus of the IEEE1394 system, an asynchronous transfer mode and an isochronous transfer mode are prepared, and both the modes are selectively used depending on the type of data to be transmitted (the details of the asynchronous transfer mode and the isochronous transfer mode will be described in the embodiment to be described later).

In the IEEE1394 system, although any one of the transfer modes is used, plural types of communication speeds are prescribed, and a communication speed is selected depending on the performance of a communication chip mounted on each device. More specifically, three types of communication speeds, i.e., about 100 Mbps, about 200 Mbps, and about 400 Mbps are prepared (the three types of communication speeds will be called S100 mode, S200 mode, and S400 mode, hereinafter). All communication chips of the IEEE1394 system are basically designed to perform communication in the S100 mode. Some communication chip has a configuration in which communication can be performed in a mode having a communication speed higher than that of the S100 mode depending on the performance of the chip.

When data communication is performed through a bus of the IEEE1394 system, communication is performed at the highest speed included in a transmission chip and a reception chip, so that communication resources on the bus can be effectively used. The communication speed control is executed when a device called a bus manager is arranged on the bus, and the device controls communication on the bus. This bus manager is designed to collect and hold the information on devices connected to the bus, to recognize a network topology, and to manage communication on the bus.

However, in a network configuration using a bus of the IEEE1394 system, the bus manager described above does not always exist on the bus. For example, when a plurality of video devices and a plurality of audio devices which serve as consumer devices each having a terminal for a bus of the IEEE1394 system are prepared and simply connected through the bus, the configuration does not generally include a bus manager.

Even in the network which does not include the bus manager, data communication can be performed. However, since communication speed is not basically controlled, communication is performed in a mode (S100 mode) having the lowest speed of the prepared communication speeds. Therefore, when the bus manager does not exist on the network, even though a communication chip of each device copes with high-speed communication, communication resources on the bus cannot be effectively used by using the capability of the communication chip.
[0007]

On the other hand, when communication is performed by a bus of the IEEE1394 system in an isochronous transfer mode, for example, a device on a transmission side and a device on a reception side cope with a high communication speed. For this reason, when communication is performed in the S200 mode or the S400 mode, a communication state cannot always be recognized by another device connected to the network. More specifically, for example, when communication is performed in an isochronous transfer mode, a channel for broadcast transmission called a default channel (Default CH) is prepared. Even a device which is not the device of a transmission destination and is connected to the bus is designed to decide the data of a packet to be transmitted by the default channel. When the decision can be performed, a process of plundering packet transmission rights or other processes can be performed.

However, when communication is performed at the highest communication speed by using the default channel, and when a device which can receive data at only a low communication speed exists on the network, the device which copes with only the low-speed communication cannot decide data transmitted by the default channel. A process of deciding the data of the channel to remove packet transmission rights cannot be performed.

### DISCLOSURE OF THE INVENTION

It is an object of the present invention to make it possible to preferably set a communication speed when communication is performed between devices connected through a bus line in which plural types of communication speeds of the IEEE1394 system or the like exist.

According to the first invention, in a communication method for performing communication between devices which are connected through a digital communication control bus in which plural types of communication speeds are established,
when communication is performed between the devices connected through the digital communication control bus, after a predetermined packet is received, a communication speed of a response packet transmitted to a transmission source of the predetermined packet is set to be a communication speed of the predetermined packet. In this manner, the response packet is also transmitted at a communication speed of a packet sent from one device. For example, when a packet having a high communication speed is received, the response packet is also transmitted at a high communication speed, so that efficient communication resources which effectively use the capabilities of a device connected to a bus can be effectively utilized.

According to the second invention, in the communication method of the first invention,
communication on the digital communication control bus is executed without arranging a device serving as a bus manager. In this manner, communication speed control when communication speed management performed by the bus manager cannot be performed can be excellently performed.

According to the third invention, in the communication method of the first invention,
in transmitting a request packet which can be received by an unspecified device connected through the digital communication control bus, the lowest communication speed of the prepared communication speeds is set. In this manner, a request packet can be received by a device coping with any communication speed, and, for example, a process such as a process of plundering packet transmission rights can be performed by any device.

According to the fourth invention, in the communication method of the first invention,
when there is data related to a communication speed of a destination which performs communication, a highest communication speed at which communication is performed with the destination is set on the basis of the data to transmit a request packet. In this manner, the most efficient transmission is performed by using the data related to the communication speed.

According to the fifth invention, in the communication method of the fourth invention,
when the digital communication control bus is reset, the data related to the communication speed is erased. In this manner, after the bus reset is made, an erroneous operation when a network configuration changes can be prevented.

According to the sixth invention, in the communication method for performing communication between devices which are connected through a digital communication control bus in which plural types of communication speeds are prescribed,
in communicating a request packet which can be received by an unspecified device connected through the digital communication control bus, the lowest communication speed of the prepared communication speeds is set. In this manner, even though the devices connected to the bus include a device which does not cope with a high communication speed, a request packet is transmitted at the lowest communication speed. For this reason, judgement can be performed by receiving the packet, and a transmission state on the bus can be judged by any device.

According to the seventh invention, in the communication method of the sixth invention,
a process of plundering packet transmission rights can be performed by the device which receives the request packet. In this manner, a chance that communication is equally performed by all the connected devices without depending on the communication speed.

According to the eighth invention, a communication system in which communication can be performed between a plurality of communication devices connected through a predetermined digital communication control bus in which plural types of communication speeds are prescribed, comprises:
as a first communication device connected to the digital communication control bus,
communication means which performs transmission and reception of a packet through the digital communication control bus and which can perform the transmission and the reception at a limited communication speed of the plural types of communication speeds;
as a second communication device connected to the digital communication control bus,
communication means which performs transmission and reception of a packet through the digital communication control bus and which can perform the transmission and the reception at the plural types of communication speeds; and
control means which judges a communication speed of a packet received from the first communication device by the communication means to set the transmission speed of a response packet to the first communication device with respect to the received packet to be the judged communication speed. In this manner, a response packet from the second communication device is transmitted at a communication speed of a packet transmitted by the first communication device. For example, when a packet having a high communication speed is received by the second communication device, the response packet is also transmitted at a high communication speed, so that efficient communication resources which effectively use the capabilities of the devices connected to the bus can be effectively utilized.

According to the ninth invention, in the communication system of the eighth invention,
communication between the first communication device and the second communication device through the digital communication control bus is executed without arranging a device serving as a bus manager. In this manner, communication speed control in a communication system which cannot perform communication speed management by a bus manager can be excellently performed.

According to the tenth invention, in the communication system of the eighth invention,
when a request packet which can be received by an unspecified device connected through the digital communication control bus is transmitted from the communication means, the control means of the second communication device sets the lowest communication speed out of the prepared communication speeds. In this manner, the request packet transmitted from the second communication device can be received by a device coping with any communication speed, and, for example, a process such as a process of plundering packet transmission rights can be performed by any device on the network.

According to the eleventh invention, in the communication system of the eighth invention,
when data related to a communication speed of the destination of the first communication device is stored in the control means of the second communication device, a highest communication speed at which communication can be performed with the first communication device on the basis of the stored data is set, and the communication means transmits a request packet. In this manner, the most efficient transmission is performed by using the data related to the communication speed stored in the communication devices in the network.

According to the twelfth invention, in the communication system of the eleventh invention,
the control means of the second communication device erases the storage of the data related to the communication speed when the digital communication control bus is reset. In this manner, after the bus reset is made, an erroneous operation caused by an erroneous setting of the communication speed when a network configuration changes can be prevented.

According to the thirteenth invention, a communication system which can perform communication between a plurality of communication devices connected through a digital communication control bus in which plural types of communication speeds are established, comprises:
as a first communication device connected to the digital communication control bus,
communication means which performs transmission and reception of a packet through the digital communication control bus and which can perform the transmission and the reception at the plural types of communication speeds; and
control means which sets the lowest communication speed of a packet received from the first communication device of prepared communication speeds when a request packet which can be received by an unspecified device connected through the digital communication control bus is transmitted from the communication means. In this manner, even though the devices connected to the bus include a device which does not cope with a high communication speed, a request packet is transmitted at the lowest communication speed. For this reason, judgement can be performed by receiving the packet, and a transmission state on the bus can be determined by any device.

According to the fourteenth invention, in the communication system of the eleventh invention,
a process of plundering packet transmission rights is executed by the second communication device which receives the request packet transmitted from the communication means of the first communication device. In this manner, even though the second communication device in the network is a device which does not cope with a high speed communication, the second communication device has a chance that communication is performed under the same conditions as those of another device coping with high-speed communication.

According to the fifteenth invention, an electronic device which can perform communication with a destination connected to a predetermined digital communication control bus in which plural types of communication speeds are established, comprises:
communication means which performs transmission and reception of a packet through the digital communication control bus and which can perform the transmission and the reception at the plural types of communication speeds; and
control means which judges a communication speed of a packet received by the communication device to set the transmission speed of a response packet with respect to the received packet to be the judged communication speed. In this manner, the response packet is transmitted at the communication speed of the received packet. For example, when a packet having a high communication speed is received, the response packet is also transmitted at a high communication speed, and an electronic device which can effectively utilize communication resources on the bus can be obtained.

According to the sixteenth invention, in the electronic device of the fifteenth invention,
when a request packet which can be received by an unspecified device connected through the digital communication control bus is transmitted from the communication means, the control means sets the lowest communication speed of the prepared communication speeds. In this manner, the request packet transmitted from the device can also be received by a device coping with any communication speed.

According to the seventeenth invention, in the electronic device of the fifteenth invention,
when data related to a communication speed of a destination which performs communication is stored in the control means, a highest communication speed at which communication can be performed with the destination on the basis of the stored data is set, and the communication means transmits a request packet. In this manner, an electronic device which can effectively utilize communication resources on the bus by using data stored by some process can be obtained.

According to the eighteenth invention, in the electronic device of the seventeenth invention,
when the control means detects that the digital communication control bus is reset, the control means erases stored data related to the communication speed. In this manner, when IDs of devices are changed after the bus reset, a communication error is prevented from being generated by erroneously using the stored data related to the communication speed.

According to the nineteenth invention, an electronic device which can perform communication with a destination connected to a predetermined digital communication control bus in which plural types of communication speeds are prescribed, comprises
communication means which performs transmission and reception of a packet through the digital communication control bus and which can perform the transmission and the reception at the plural types of communication speeds; and
control means which sets the lowest communication speed out of the prepared communication speeds when a request packet which can be received by an unspecified device connected through the digital communication control bus is transmitted from the communication means. In this manner, even though the devices connected to the bus include a device which does not cope with a high communication speed, a request packet transmitted from the electronic device is transmitted at the lowest communication speed. For this reason, judgement can be performed such that another device receives the packet, and a transmission state on the bus can be judged by any device connected to the device.

### BRIEF DESCRIPTION OF DRAWINGS

FIG. 1 is a block diagram showing a configuration of an entire system according to an embodiment of the present invention.
FIG. 2 is a block diagram showing an example of the configuration of a digital satellite broadcast receiver.
FIG. 3 is a block diagram showing an example of the configuration of an audio recording/reproducing device.
FIG. 4 is a block diagram showing an example of the configuration of a hard disk recording/reproducing device.
FIG. 5 is a block diagram showing an example of the configuration of an audio recording/reproducing device.
FIG. 6 is a diagram for explaining an example of a frame structure prescribed by the IEEE 1394.
FIG. 7 is a diagram for explaining an example of the structure of an address space of a CRS architecture.
FIG. 8 is a diagram showing examples of positions, names, operations of a main CRS.
FIG. 9 is a diagram for explaining a configuration of a plug control register.
FIG. 10 shows diagrams for explaining the configurations of an oMPR, an oPCR, an iMPR, and an iPCR.
FIG. 11 is a diagram for explaining a relationship among a plug, a plug control register, and a transmission channel.
FIG. 12 is a diagram for explaining a data structure obtained by a hierarchical structure of a descriptor.
FIG. 13 is a diagram for explaining a data structure of a descriptor.
FIG. 14 is a diagram for explaining an example of a generation ID in FIG. 13.
FIG. 15 is a diagram for explaining an example of a list ID in FIG. 13.
FIG. 16 is a diagram for explaining an example of a stack model of an AV/C command.
FIG. 17 is a diagram for explaining an example of a relationship between a command and a response of an AV/C command.
FIG. 18 is a diagram for explaining in more detail an example of a relationship between the command and the response of the AV/C command.
FIG. 19 is a diagram for explaining an example of the data structure of the AV/C command.
FIG. 20 is a diagram for explaining a concrete example of the AV/C command.
FIG. 21 is a diagram for explaining a concrete example of the command and the response of the AV/C command.
FIG. 22 is a diagram for explaining a configuration of a self ID packet.
FIG. 23 is a connection sequence diagram showing an example of a communication state of a packet in an asynchronous transfer mode according to an embodiment of the present invention.
FIG. 24 is a connection sequence diagram showing an example of a communication state of a packet in an asynchronous transfer mode according to an embodiment of the present invention.
FIG. 25 is a connection sequence diagram showing an example of a communication state of a packet in an asynchronous transfer mode to a known device according to an embodiment of the present invention.
FIG. 26 is a connection sequence diagram showing an example of a communication state of a packet in an asynchronous transfer mode according to an embodiment of the present invention when there is no response.
FIG. 27 is a connection sequence diagram showing an example of a communication state in an isochronous transfer mode according to an embodiment of the present invention.
FIG. 28 is a diagram for explaining a configuration of a common isochronous packet header according to an embodiment of the present invention.

### BEST MODE FOR CARRYING OUT THE INVENTION

Hereinafter an embodiment of the present invention will be explained with reference to the attached drawings.

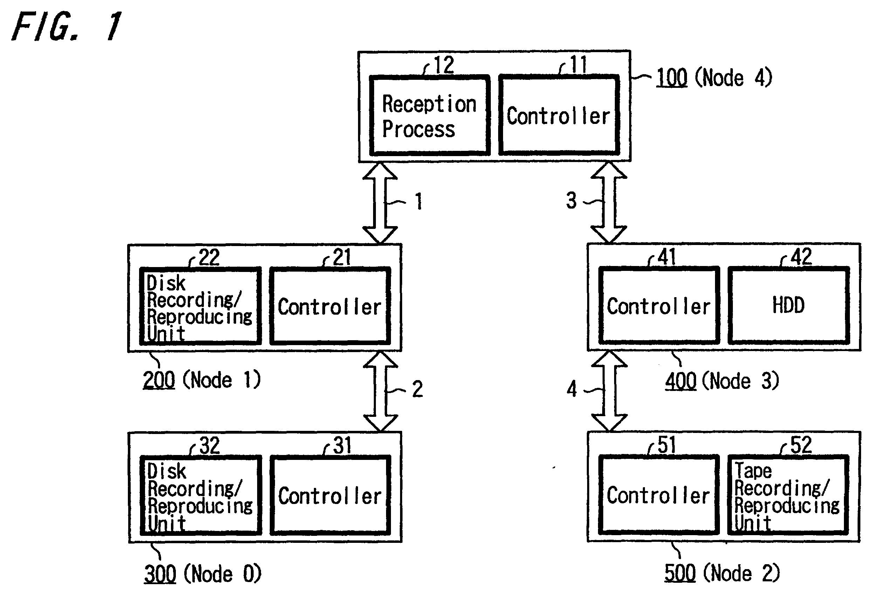

An example of the configuration of a network system to which the present invention is applied will be described below with reference to FIG. 1. In this network system, a plurality of devices are connected to each other through IEEE1394 system serial data buses (to be simply referred to as buses hereinafter) 1, 2, 3, and 4 which are digital communication control buses. FIG. 1 shows five AV devices 100, 200, 300, 400, and 500 which are sequentially connected through buses.

Devices connected to the bus 1 are a digital satellite broadcast receiver (Integrated Receiver Decoder: IRD) 100, a first MD (Mini Disc) deck 200, a second MD deck 300, a hard disc device 400, and a DV (Digital Video) deck 500 each having a terminal to be connected to a bus of the IEEE1394 system. The digital satellite broadcast receiver 100 is a device for receiving a digital satellite broadcast to demodulate the broadcast. The first and second MD decks 200 and 300 are devices each of which records and reproduces audio data or the like by using a photomagnetic disc or an optical disc called a mini-disc (MD). The hard disc device 400 is a device which can record and reproduce video data or audio data on/from a hard disc. The DV deck 500 is a digital video tape recorder/player which employs the standard of the DV syste

The devices (the IRD 100, the MD decks 200 and 300, the hard disc device 400, and the DV deck 500) connected to the buses 1 to 4 are called units. Between these units, pieces of information stored in the units can be mutually read and written by using a descriptor regulated by the AV/C Digital Interface Command Set General Specification (to be referred to as the AV/C hereinafter) of the AV/C Command Transaction Set. The details of the AV/C are disclosed at http://www.1394TA.org. The functions included in the respective units are called sub-units.

The respective units connected to the buses 1 to 4 are also called nodes. As node IDs on the buses, the second MD deck 30 is set as node 0, the first MD deck 20 is set as node 1, the DV deck 50 is set as node 2, the hard disc device 40 is set as node 3, and the digital satellite broadcast receiver 10 is set as node 4. However, the node IDs are added again when the buses are reset, and the node IDs may be changed into other node IDs.

A parabolic antenna is connected to the digital satellite broadcast receiver 100 which receives and decodes a digital satellite broadcast or the like. A reception processor 12 connected to the parabolic antenna performs a process of receiving and decoding a signal of the predetermined channel. In this case, a controller 11 incorporated in the digital satellite broadcast receiver 100 performs control related to a reception operation such as reception and decoding.

As a channel which can be received by the digital satellite broadcast receiver 100, in addition to a video channel (so-called normal television broadcast channel) from which video data and audio data accompanying the video data are obtained, an audio channel from which only audio data on music or the like is obtained, a data channel from which various data such as data for the Internet web browsing is obtained, and the like are known. As audio data transmitted by the audio channel, not only audio data modulated by a general method such as the MPEG system, but also a channel from which audio data compressed and coded at high efficiency by the ATRAC (Adaptive Transform Acoustic Coding) or the like is obtained may be used.

Even data transmission from the digital satellite broadcast receiver 100 to the buses 1 to 4 and reception in the receiver 100 of data transmitted through the buses 1 to 4 are controlled by the controller 11. As data transmission between the digital satellite broadcast receiver 100 and the other devices 200, 300, 400, and 500, for example, video data and audio data of a video channel received by the digital satellite broadcast receiver 100 are transmitted to the DV deck 500, and the video data or the like can be recorded on a video tape in a loaded video cassette. The audio data of the audio channel received by the digital satellite broadcast receiver 100 is transmitted to the MD deck 200 or the MD deck 300, and the audio data or the like can be recorded on a loaded magneto-optic disc. In place of the DV deck or the MD deck, by using the hard disk device 40, the video data and the audio data can also be recorded.

In this case, by using the AV/C command described above, the controller 11 in the digital satellite broadcast receiver 100 may control a recording operation of another device.

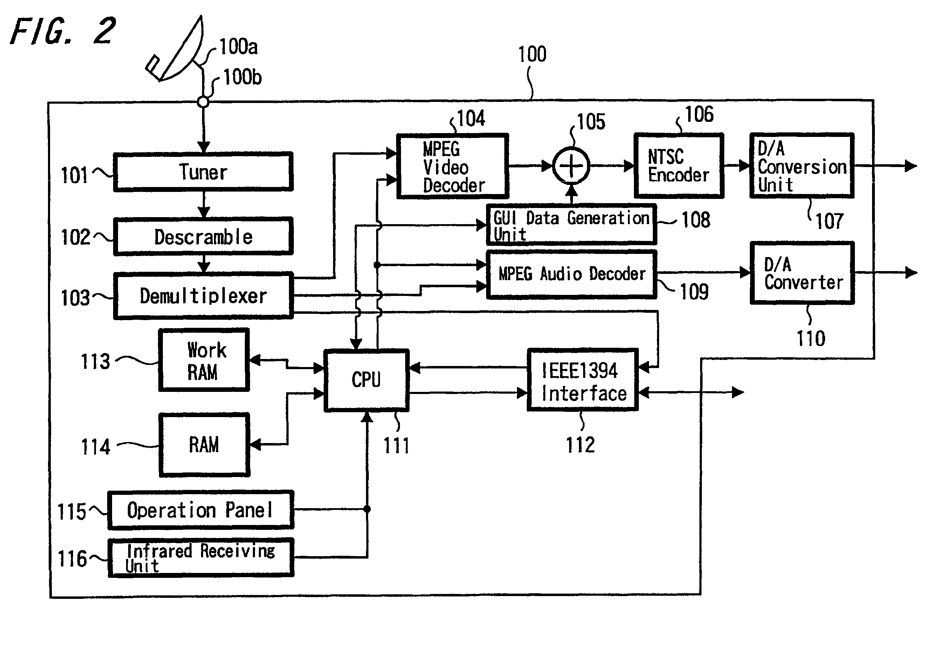

FIG. 2 is a diagram showing a concrete example of the configuration of a digital satellite broadcast receiver 100. A broadcast radio wave from a satellite is received by an antenna 100a to be input to a terminal 100b and supplied to a tuner 101 serving as a program selection means arranged in the digital satellite broadcast receiver 100. The IRD 100 is designed such that circuits operate on the basis of the control of a central processing unit (CPU) 111, and obtains a signal of a predetermined channel by the tuner 101. The received signal obtained by the tuner 101 is supplied to a descramble circuit 102.

The descramble circuit 102 extracts only multiplexed data on a contracted channel (or a channel which is not coded) of received data on the basis of code key information of a contracted channel stored in an IC card (not shown) inserted into the body of the receiver 100 to supply the multiplexed data to a demultiplexer 103.

The demultiplexer 103 rearranges supplied multiplexed data by channel, extracts only a channel designated by a user, transmits a video stream constituted by a packet of a video part to an MPEG video decoder 104, and transmits an overlap stream constituted by a packet of an audio part to an MPEG audio decoder 109.

The MPEG video decoder 104 decodes the video stream to restore video data before compression coding, and transmits the video data to an NTSC encoder 106 through an adder 105. The NTSC encoder 106 converts the video data into a luminance signal and a color-difference signal of the NTSC system, and transmits the luminance signal and the color-difference signal to a digital/analog converter 107 as video data of the NTSC system. The digital/analog converter 107 converts the NTSC data into an analog video signal and supplies the analog video signal to a connected image receiver (not shown).

The digital satellite broadcast receiver 100 of this embodiment comprises a GUI data generation unit 108 for generating video data for various displays for a graphical user interface (GUI) on the basis of the control of the CPU 111. Video data (display data) for GUI generated by the GUI data generation unit 108 is supplied to the adder 105, superposes the video data on the video data output from the MPEG video decoder 104, so that the video data for GUI is superposed on the video image of a received broadcast.

The MPEG audio decoder 109 decodes the audio stream to restore PCM audio data before compression coding, and transmits the PCM audio data to a digital/analog converter 110.

The digital/analog converter 110 converts the PCM audio data into an analog signal to generate an LCh audio signal and an RCh audio signal, and outputs the LCh audio signal and the RCh audio signal as voice through a loudspeaker (not shown) of an audio reproduction system connected to the digital/analog converter 110.

The digital satellite broadcast receiver 100 of this embodiment is designed such that the video stream and the audio stream extracted by the demultiplexer 103 is supplied to an IEEE 1394 interface unit 112 and such that the video stream and the audio stream can be transmitted to bus lines 1 to 4 of the IEEE 1394 connected to the IEEE 1394 interface unit 112. This received video stream or audio stream is transmitted in a isochronous mode. In addition, when video data for GUI is generated by the GUI data generation unit 108, the video data is supplied to the IEEE 1394 interface unit 112 through the CPU 111, so that the video data for GUI can be transmitted from the IEEE 1394 interface unit 112 to the bus lines 1 to 4.

A work RAM 113 and a RAM 114 are connected to the CPU 111. A control process is performed by using these memories. In addition, an operation command from an operation panel 115 and a remote control signal from an infrared receiving unit 116 are supplied to the CPU 111, so that an operation on the basis of various operations can be executed. It is so arranged that command, a response, and the like transmitted from the bus lines 1 to 4 to the IEEE 1394 interface unit 112 can be determined by the CPU 111.

A reception processor 12 in the digital satellite broadcast receiver 100 shown in FIG. 1 corresponds to a signal processing system including the tuner 101 to the digital/analog converters 107 and 110 in the concrete example of the configuration shown in FIG. 2, and a controller 11 corresponds to the CPU 111.

A first audio recording/reproducing device 200 and a second audio recording/reproducing device 300 are disk recording/reproducing devices which can record audio data and data appendant to the audio data as digital data in a magneto-optic disk of a format called as a mini disk (Mini Disk: MD) and can reproduce the digital data. Controllers 21 and 31 of the second audio recording/reproducing devices 200 and 300 accept an operation for a recording or reproducing instruction, a recording reservation operation, and the like from a user to control the all operations of all the audio recording/reproducing device. In disk recording/reproducing units 22 and 32, audio data input from the bus lines 1 to 4 or other input units are recorded on a magneto-optic disk. In this case, data is recorded on a disk as data subjected to compression coding by the ATRAC. Therefore, when the audio data transmitted through the bus lines 1 to 4 are data of the ATRAC system, the transmitted audio data are directly recorded as they are on a disk.

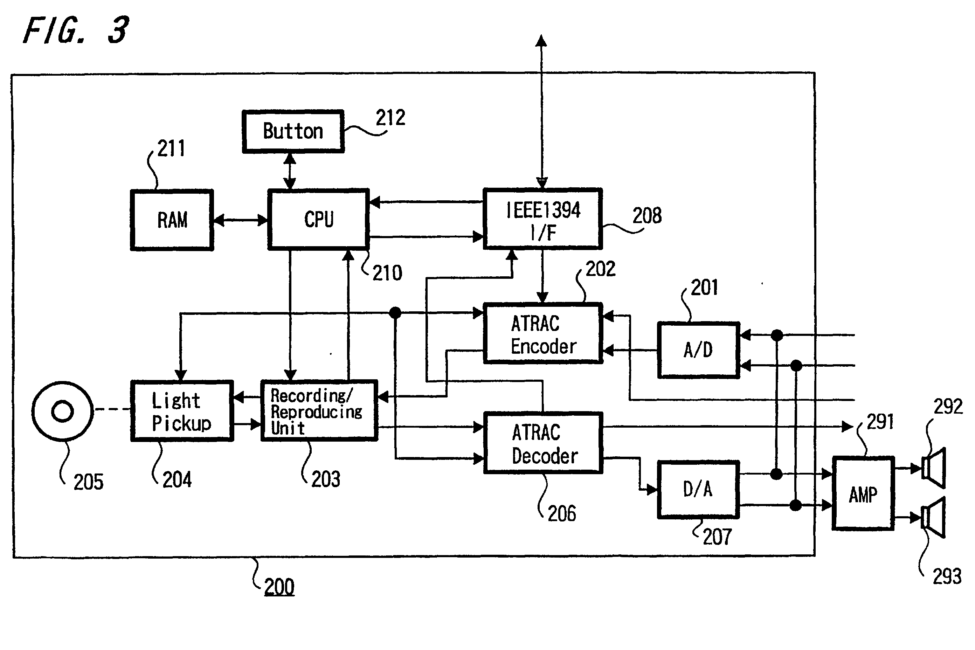

FIG. 3 is a block diagram showing a concrete example of the configuration of the first audio recording/reproducing device 200. The audio recording/reproducing device 200 of this embodiment is a device which uses a magneto-optic disk stored in a resin package called as an MD (mini disk) or an optical disk as a recording medium and records and reproduces an audio signal or the like as digital data.

As the configuration of the recording system, an analog 2-channel audio signal input from the outside is converted into digital audio data by an analog/digital converter 201. The converted digital data is supplied to an ATRAC (Adaptive Transform Acoustic Coding) encoder 202 to be encoded into audio data compressed by the ATRAC. When digital audio data is directly input from the outside, the input audio data is directly supplied to the ATRAC encoder 202 without the analog/digital converter 201. The data encoded by the encoder 202 is supplied to a recording/reproducing unit 203 to perform a process for recording. A light pickup 204 is driven on the basis of the processed data to record data on a disk (magnetic disk) 205. In recording, magnetic modulation is performed by a magneto-optic head (not shown).

As the configuration of a reproducing system, the data recorded on the disk (magneto-optic disk or optical disk) 205 is read by the light pickup 204 and subjected to a reproducing process by the recording/reproducing unit 203 to obtain audio data compressed by the ATRAC. The reproduced audio data is supplied to an ATRAC decoder 206 to be decoded into digital audio data of a predetermined system. The decoded audio data is supplied to a digital/analog converter 207 to be converted into a 2-channel analog audio signal, and the 2-channel analog audio signal is output. When the digital audio data is directly output to the outside, the audio data decoded by the ATRAC decoder 206 is directly output without the digital/analog converter 207. In the example shown in FIG. 3, the analog-converted output audio signal is supplied to an amplifier 291 and subjected to an audio output process such as amplification, so that 2-channel voice (audio) is output from the loudspeakers 292 and 293 connected to the amplifier 291.

The audio recording/reproducing device 200 comprises an interface unit 208 for connecting the audio recording/reproducing device 200 to a bus of the IEEE 1394, and is designed such that audio data obtained from the bus of the IEEE 1394 to the interface unit 208 is supplied to the recording/reproducing unit 202 and can be recorded on the disk 205. The audio data reproduced from the disk 205 is supplied from the recording/reproducing unit 202 to the interface unit 208 through the ATRAC decoder 206, so that the audio data can be transmitted to the bus of the IEEE 1394.

A recording process and a reproducing process in the first audio recording/reproducing device 200 and a transmission process through the interface unit 208 are executed by the control of a central processing unit (CPU) 210. A memory 211 serving as a work RAM is connected to the CPU 210. Operation information from an operation panel 212 is supplied to the CPU 210, and operation control corresponding to the operation information is performed. In addition, when the interface unit 208 receives control data such as an AV/C command (to be described later) through the bus of the IEEE 1394, the data is supplied to the CPU 210, so that the CPU 210 can perform the corresponding operation control.

The controller 21 of the first audio recording/reproducing device 200 shown in FIG. 1 corresponds to the CPU 210, and the disk recording/reproducing unit 22 corresponds to a processing system (system including the analog/digital converter 201 to the light pickup 204) for a signal recorded on the disk 205 and a processing system (system including the light pickup 204 to the digital/analog converter 207) for a signal reproduced from the disk 205. Although the configuration of the first audio recording/reproducing device 200 is described here, the configuration of the second audio recording/reproducing device 300 is the same as that of the first audio recording/reproducing device 200.

The hard disk device 400 is a recording/reproducing device which can record video data, audio data, and other data by a capacity which can be recorded by an incorporated hard disk (magnetic disk). A controller 41 controls recording and reproduction in a hard disk drive 42. For example, video data for several ten hours to several hundred hours can be recorded on the hard disk drive 42. When write and read processes for the hard disk are performed in a time sharing manner, a recording process of data input to the hard disk device 400 and a reproducing process of the recorded data can be simultaneously performed.

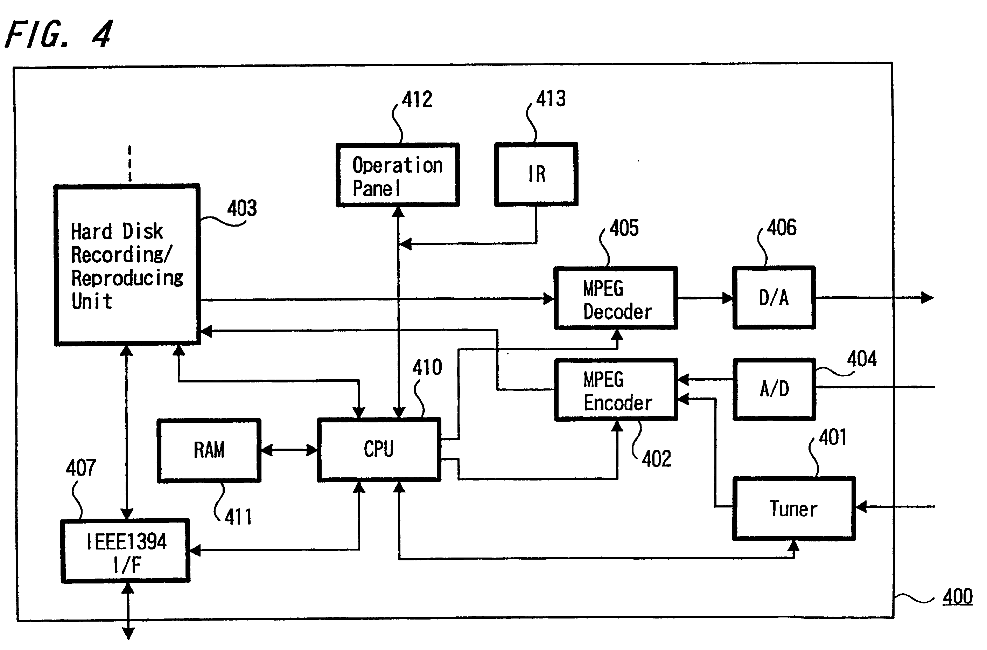

FIG. 4 is a block diagram showing a concrete example of the configuration of the hard disk device 400.

As the configuration of a recording system, digital broadcast data obtained by causing the tuner 401 to receive a predetermined channel is supplied to an MPEG (Moving Picture Expernts Group) encoder 402 to be converted into video data and audio data of a system appropriate to recording, e.g., the MPEG2. When the received broadcast data is data of the MPEG2, the process in the encoder 402 is not performed.

The data encoded by the MPEG encoder 402 is supplied to a hard disk recording/reproducing unit 403 serving as a hard disk drive to be recorded on an incorporated hard disk.

An analog video signal and an analog audio signal input from the outside are converted into digital data by an analog/digital converter 404, and the digital data are converted into video data and audio data of, e.g., the MPEG2 by the MPEG encoder 402. The video data and the audio data are recorded on the hard disk recording/reproducing unit 403.

As the configuration of a reproducing system, video data and audio data reproduced from the hard disk by the hard disk recording/reproducing unit 403 are supplied to an MPEG decoder 405, and are subjected to decode from, e.g., the MPEG2. The decoded data are supplied to the digital/analog converter 406 to be converted into analog video signal and an analog audio signal, and the analog video signal and the analog audio signal are output to the outside.

The hard disk device 400 comprises an interface unit 407 for connecting the hard disk device 400 to a bus of the IEEE 1394, and is designed such that video data and audio data obtained from the bus of the IEEE 1394 to the interface unit 407 are supplied to the hard disk recording/reproducing unit 403 and can be recorded. The video data and audio data reproduced by the hard disk recording/reproducing unit 403 are supplied to the interface unit 407, so that the video data and the audio data can be transmitted to the bus of the IEEE 1394.

In transmitting via the interface unit 407, when the system (e.g., the MPEG2 described above) for recording data on a medium (hard disk) in the hard disk device 400 is different from the system of data transmitted on the bus of the IEEE 1394, a system change may be performed by the circuit in the hard disk device 400.

A recording process and a reproducing process in the hard disk device 400 and a transmission process through the interface unit 407 are executed by the control of a central processing unit (CPU) 410. A memory 411 serving as a work RAM is connected to the CPU 410. Operation information from an operation panel 412 is supplied to the CPU 210 and control information received by an infrared receiving unit 413 and output from a remote control device are supplied to the CPU 410, so that operation control corresponding to the operation information or the control information is performed. In addition, when the interface unit 407 receives control data such as an AV/C command (to be described later) through the bus of the IEEE 1394, the data is supplied to the CPU 410, so that the CPU 410 can perform the corresponding operation control.

The controller 41 of the hard disk device 400 shown in FIG. 1 corresponds to the CPU 410, and a hard disk drive 42 corresponds to a hard disk recording/reproducing unit 403 and its peripheral circuits.

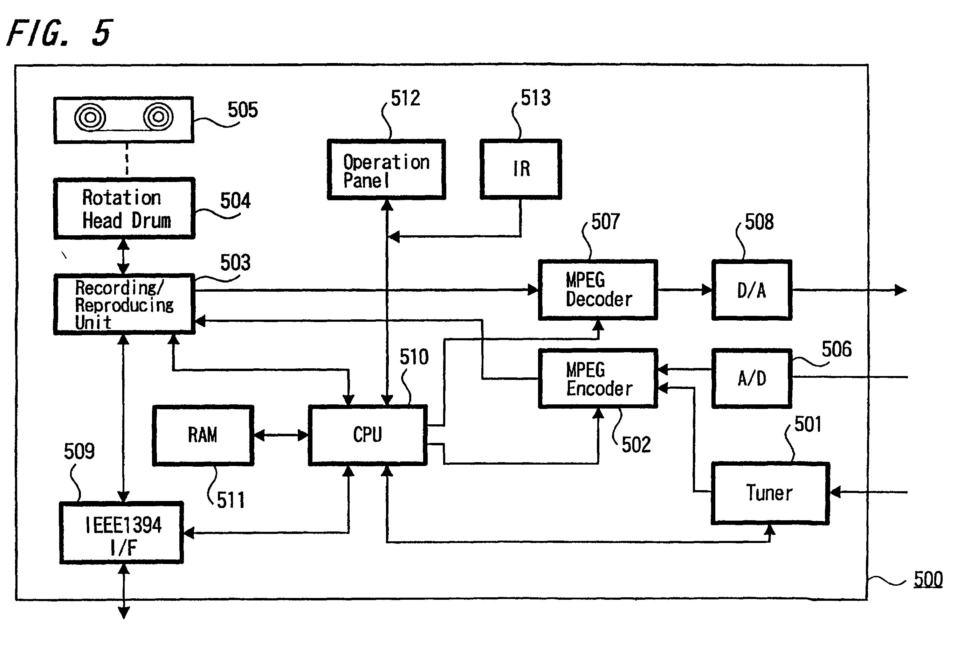

A video recording/reproducing device 500 is a tape recording/reproducing device which can record and reproduce video data, audio data, and data appendant to these data as digital data on a video tape. A controller 51 of the video recording/reproducing device 500 accepts an operation of a recording or reproducing instruction, a recording reservation operation, and the like from a user to control all the operations of the video audio recording/reproducing device 500. In the tape recording/reproducing unit 22, video data and audio data supplied from the digital satellite broadcast receiver 100 or the like through an incorporated tuner (not shown) or the bus lines 1 to 4 are recorded on a magnetic tape as digital data. FIG. 5 is a block diagram showing a concrete example of the configuration of the video recording/reproducing device 500.

As the configuration of a recording system, digital broadcast data obtained by causing a tuner 501 incorporated in the video recording/reproducing device 500 to receive a predetermined channel is supplied to an MPEG (Moving Picture Experts Group) encoder 502, and is converted into video data and audio data of a system appropriate to recording, e.g., the MPEG2. When the received broadcast data is data of the MPEG2 system, the process in the encoder 502 is not performed.

The data encoded by the MPEG encoder 502 is supplied to a recording/reproducing unit 503 and subjected to a process for recording, and the processed recording data is supplied to a recording head in a rotation head drum 504 to be recorded on a magnetic tape in the tape cassette 505.

An analog video signal and an analog audio signal input from the outside are converted into digital data by an analog/digital converter 506, and the digital data are converted into video data and audio data of, e.g., the MPEG2 system by the encoder 502. The video data and the audio data are supplied to the recording/reproducing unit 503 and subjected to a process for recording, and the processed data is supplied to the recording head in the rotation head drum 504 to be recorded on the magnetic tape in the tape cassette 505.

As the configuration of a reproducing system, a signal obtained by reproducing the magnetic tape in the tape cassette 505 by the rotation head drum 504 is subjected to a reproducing process by the recording/reproducing unit 503 to obtain video data and audio data. The video data and audio data are supplied to an MPEG decoder 507, and are subjected to decoding from, e.g., the MPEG2 system. The decoded data are supplied to a digital/analog converter 508 to be converted into analog video signal and an analog audio signal, and the analog video signal and the analog audio signal are output to the outside.

The video recording/reproducing device 500 comprises an interface unit 509 for connecting the video recording/reproducing device 500 to a bus of the IEEE 1394, and is designed such that video data and audio data obtained from the bus of the IEEE 1394 to the interface unit 509 are supplied to the recording/reproducing unit 503 and can be recorded on the magnetic tape in the tape cassette 505. The video data and audio data reproduced from the magnetic tape in the tape cassette 505 are supplied from the recording/reproducing unit 503 to the interface unit 509, so that the video data and the audio data can be transmitted to the bus of the IEEE 1394.

In transmitting via the interface unit 509, when the system (e.g., the MPEG2 described above) for recording data on a medium (magnetic tape) in the video recording/reproducing device 500 is different from the system of data transmitted on the bus of the IEEE 1394, a system change may be performed by the circuit in the video recording/reproducing device 500.

A recording process and a reproducing process in the video recording/reproducing device 500 and a transmission process through the interface unit 509 are executed by the control of a central processing unit (CPU) 510. A memory 511 serving as a work RAM is connected to the CPU 510. Operation information from an operation panel 512 and control information received by an infrared receiving unit 513 and output from a remote control device are supplied to the CPU 510, so that operation control corresponding to the operation information or the control information is performed. In addition, when the interface unit 509 receives control data such as an AV/C command (to be described later) through the bus of the IEEE 1394, the data is supplied to the CPU 510, so that the CPU 510 can perform the corresponding operation control.

The controller 51 of the video recording/reproducing device 500 shown in FIG. 1 corresponds to the CPU 410, and a tape recording/reproducing unit 52 corresponds to a processing system for a signal recorded on the tape cassette 505 and a processing system for a signal reproduced from the tape cassette 505.

The controllers 11, 21, 31, 41, and 51 of the devices 100, 200, 300, 400, and 500 shown in FIG. 1 have storage units in which descriptors of the AV/C commands of the respective devices are set and stored. Data such as commands required to read and write the descriptors are stored in the storage units.

Data transmission states on the bus lines 1 to 4 of the IEEE 1394 mutually connected to the devices 100, 200, and 300 will be described below.

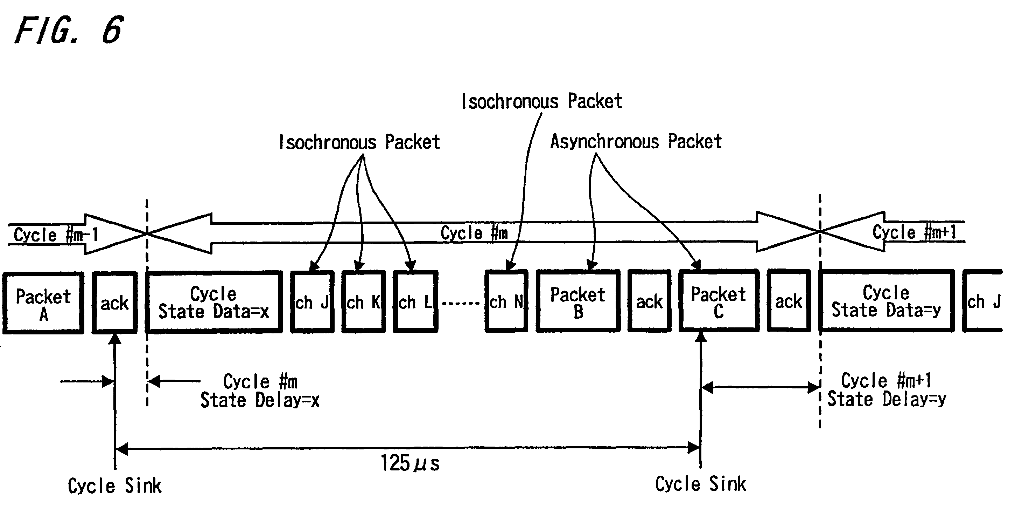

FIG. 6 is a diagram showing the cycle structure of data transmission of devices connected through the IEEE 1394 bus. In the IEEE 1394 bus, data is divided into packets, and the packets are transmitted in a time sharing manner with reference to a cycle having a length of 125 µS. The cycle is made on the basis of a cycle start signal supplied from a node (any device connected to the bus) having a cycle master function. An isochronous packet assures a band (which is a time unit but is called a band) required for transmission from the heads of all the cycles. For this reason, in isochronous transmission, transmission of the data within a fixed time period is guranteed. However, acknowledgement from the reception side is not performed. When a transmission error occurs, a protection device does not exist, and the data are lost. In isochronous transmission in which a node secures a bus as a result of arbitration transmits an isochronous packet in a period of time not used for isochronous transmission of the respective cycles, reliable transmission is secured by using acknowledge and retry. However, the transmission timing is not constant.

When a predetermined node performs isochronous transmission, the node must correspond to an isochronous function. At least one of nodes corresponding to the isochronous function must have a cycle master function. In addition, at least one of the nodes connected to the IEEE 1394 serial bus must have the function of isochronous resource manager.

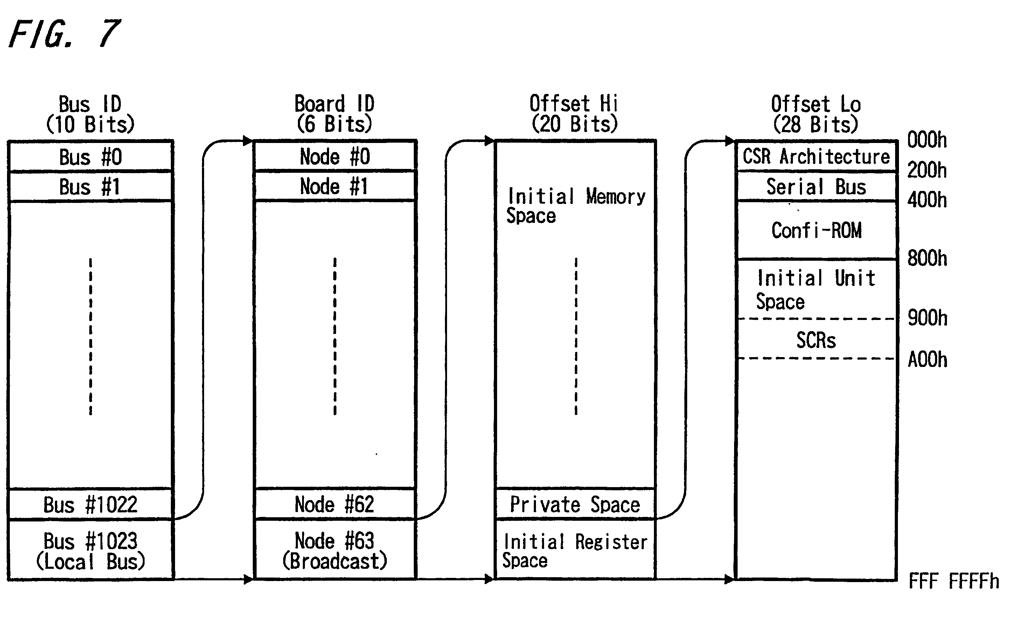

The IEEE 1394 is referent to a CSR (Control & Status Register) architecture having 64-bit address space regulated by ISO/IEC 13213. FIG. 7 is a diagram for explaining the structure of the address space of the CSR architecture. The upper 16 bits represent a node ID representing a node of each IEEE 1394 bus, and the remaining 48 bits are used to designate address spaces given to the respective nodes. The upper 16 bits are classified into 10 bits of a bus ID and 6 bits of a physical ID (node ID in a narrow sense). Since a value obtained when all the bits are 1 is used for a special object, 1,023 buses and 63 nodes can be designated. The node ID is added again when bus reset occurs. The bus reset occurs when the configuration of the devices connected to the bus lines 1 to 4 changes. For example, when it is recognized that any one of devices connected to the bus lines 1 to 4 is removed, or that a new device is connected to the bus lines 1 to 4, the bus reset is executed.

A space regulated by the upper 20 bits in a 256-terabit address space regulated by lower 48 bits is divided into an initial register space (Initial Register Space) used for a 2048-byte register unique to the CSR, a register unique to the IEEE 1394, or the like, a private space (Private Space), an initial memory space (Initial Memory Space), and the like. In the case that a space regulated by the upper 20 bits is the initial register space, a space regulated by the lower 28 bits is used as a configuration ROM (Configuration read only memory), an initial unit space (Initial Unit Space) uniquely applied to a node, a plug control register (Plug Control Register (PCRs)), or the like.

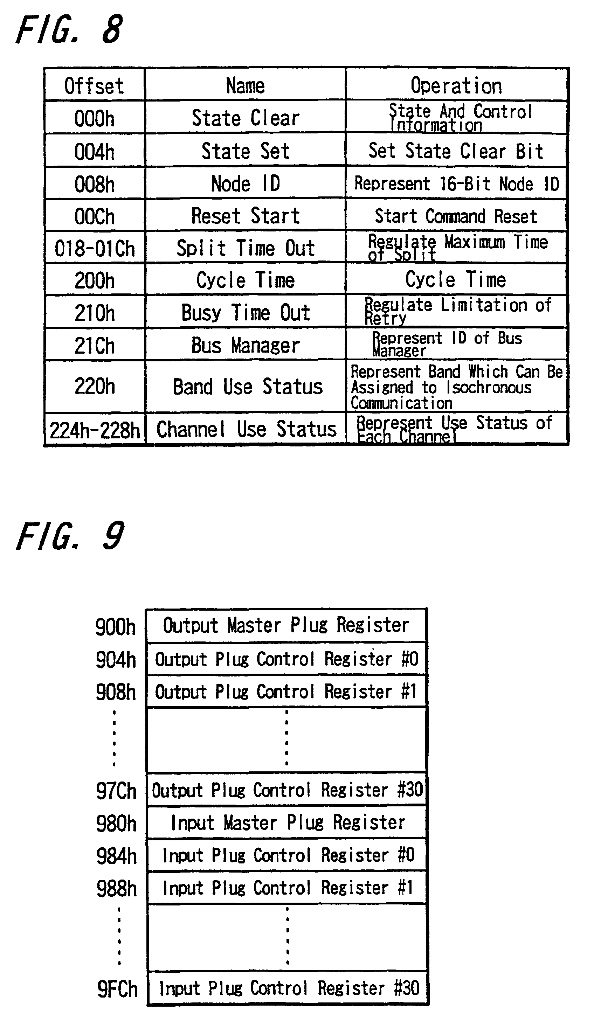

FIG. 8 is a diagram for explaining offset addresses, names, and operations of a main CSR. The offset in FIG. 8 represents an offset address from FFFFF0000000h (number including h at the end represents hexadecimal notation) at which the initial register space is started. A bandwidth available register (Bandwidth Available Register) having an offset 220h represents a band which can be assigned to isochronous communication, and only the value of a node operating as an isochronous resource manager is effective. More specifically, although each node has the CSR in FIG. 7, only a bandwidth available register of the isochronous resource manager is effective. In other words, only the isochronous resource manager substantially has the bandwidth available register. The maximum value is stored in the bandwidth available register when a band is not assigned to the isochronous communication, and the value reduces each time the band is assigned.

Channel available registers (channels Available Registers) of offsets 224 to 228h have bits corresponding to the channel numbers of number 0 to number 63, respectively. A bit of 0 represents that the channel has been assigned. Only the channels available register of a node operating as an isochronous resource manager is effective.

Returning to FIG. 7, a configuration ROM based on a general ROM (read only memory) format is arranged at addresses 200h to 400h in the initial register space. In the configuration ROM, a bus info block, a root directory, and a unit directory are arranged. An ID number representing the manufacturer of the device is stored in a company ID (Company ID) in the bus info block. A unique ID which is inherent in the device and which is different from those of other devices in the world is stored in a chip ID (Chip ID). The company ID or the chip ID are used as a node unique ID (to be described later).

Since inputting/outputting of a device is controlled through an interface, a node has a PCR (Plug Control Register) regulated by IEC 1883 at addresses 900h to 9FFh in the initial unit space in FIG. 7. This is obtained by substantiating the concept of a plug to logically form a signal path similar to an analog interface. FIG. 9 is a diagram for explaining the configuration of the PCR. The PCR has an oPCR (output Plug Control Register) representing an output plug and an iPCR (input Plug Control Register) representing an input plug. In addition, the PCR has an oMPR (output Master Plug Register) and an iMPR (input Master Plug Register) representing information on an output plug or an input plug inherent in each device. Although each device does not have a plurality of oMPRs and a plurality of iMPRs, the device can have a plurality of oPCRs and iPCRS corresponding to the respective plugs depending on the capability of the device. The PCR shown in FIG. 9 has 31 oPCRS and 31 iPCRs. The flow of isochronous data is controlled by operating registers corresponding to these plugs.

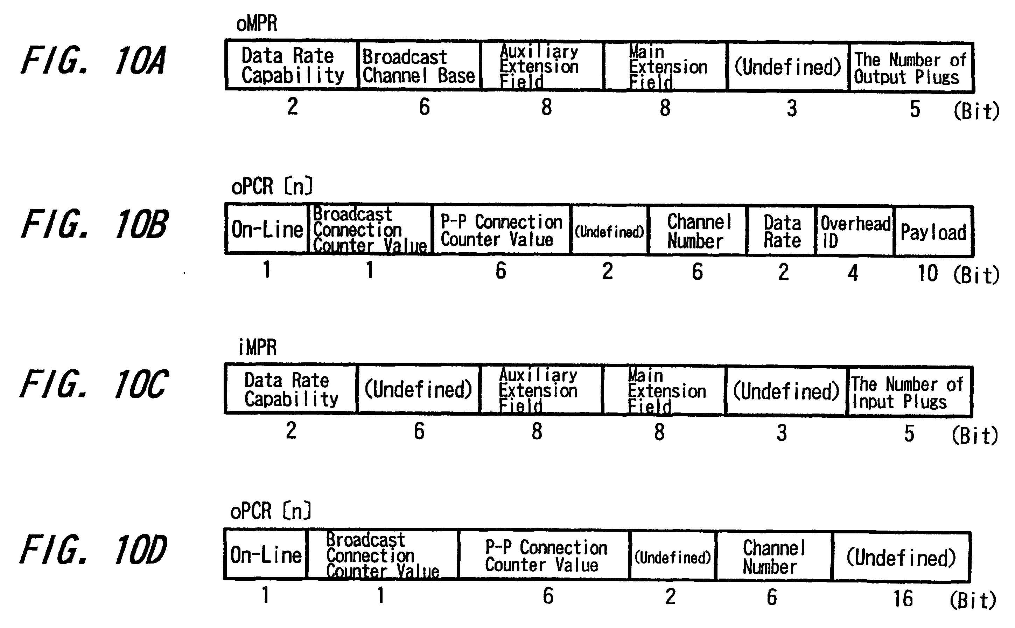

FIG. 10 shows diagrams showing the configurations of an oMPR, an oPCR, an iMPR, and an iPCR. FIG. 10A shows the configuration of the oMPR, FIG. 10B shows the configuration of the oPCR, FIG. 10C shows the configuration of the iMPR, and FIG. 10D shows the configuration of the iPCR. As 2-bit data rate capabilities of the oMPR and the iMPR on the MSB side, codes representing the maximum transmission speeds of isochronous data which can be transmitted or received by the device are stored. The broadcast channel base of the oMPR regulates the number of a channel used for broadcast outputting (broadcast outputting).

As the number of output plugs of 5 bits on the LSB side of the oMPR, the number of output plugs held by the device, i.e., a value representing the number of oPCRs is stored. As the number of input plugs of 5 bits on the LSB side of the iMPR, the number of input plugs held by the device, i.e., a value representing the number of iPCRs is stored. A main extension field and an auxiliary extension field are regions defined for extension in the future.

The on-lines of the MSBs of the oPCR and the iPCR represent use states of the plug. More specifically, the value of 1 represents that the plug is on-line, and the value of 0 represents that the plug is off-line. Each of the values of broadcast connection counters of the oPCR and the iPCR represents the presence (1) or the absence (0) of a broadcast connection. A value held by a point-to-point connection counter having a 6-bit width of each of the oPCR and the iPCR represents the number of point-to-point connections held by the plug. A point-to-point connection (to be referred to as a p-p connection hereinafter) is a connection for performing transmission only between one specific node and another specific node.

A value held by the channel number having a 6-bit width of each of the oPCR and the iPCR represents the number of an isochronous channel to which the plug is connected. A value of a data rate having a 2 bit width of the oPCR represents an actual transmission speed of a packet of isochronous data output from the plug. A code stored in an overhead ID having a 4-bit width of the oPCR represents the bandwidth of isochronous communication. The value of a payload having a 10-bit width of the oPCR represents the maximum value of data included in an isochronous packet which can be handled by the plug.

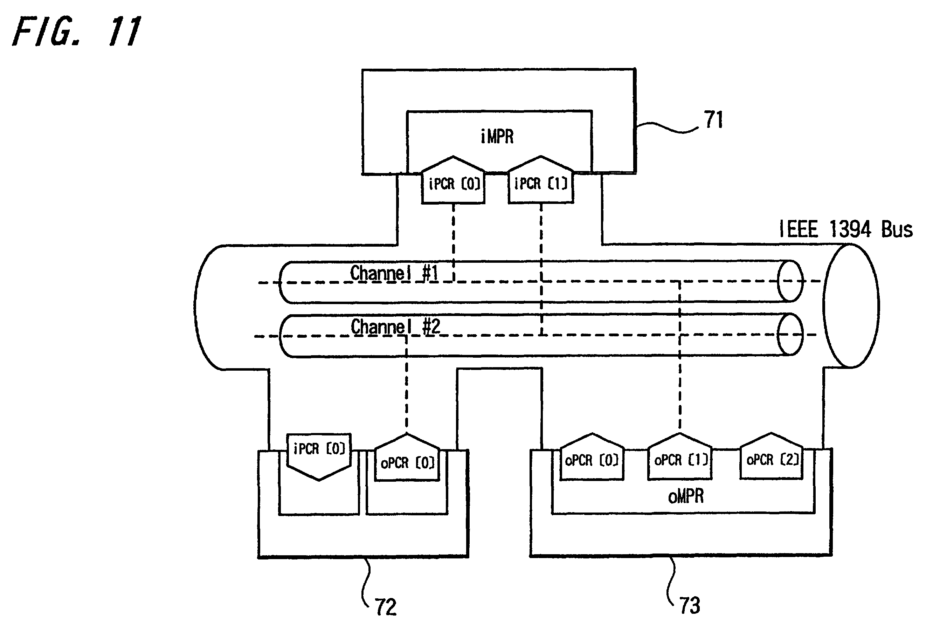

FIG. 11 is a diagram showing a relationship among a plug, a plug control register, and an isochronous channel. In this case, devices connected to the IEEE 1394 bus represent are shown as AV-devices 71 to 73. Isochronous data having a channel designated by oPCR [1] out of oPCR [0] to oPCR [2] in which transmission speeds and the number of oPCRs are regulated by the oMPR of the AV-device 73 is transmitted to channel #1 of the IEEE 1394 serial bus. The AV-device 71 loads the isochronous data transmitted to the channel #1 of the IEEE 1394 serial bus. Similarly, the AV-device 72 transmits isochronous data to channel #2 designated by oPCR [0], and the AV-device 71 reads in the isochronous data from channel #2 designated by iPRC [1].

In this manner, data transmission is performed between devices connected through the IEEE 1394 serial bus. However, in the system of this embodiment, by using an AV/C command set regulated as a command for controlling the devices connected through the IEEE 1394 serial bus, control of the devices and judgedment of states can be performed. This AV/C command set will be described below.

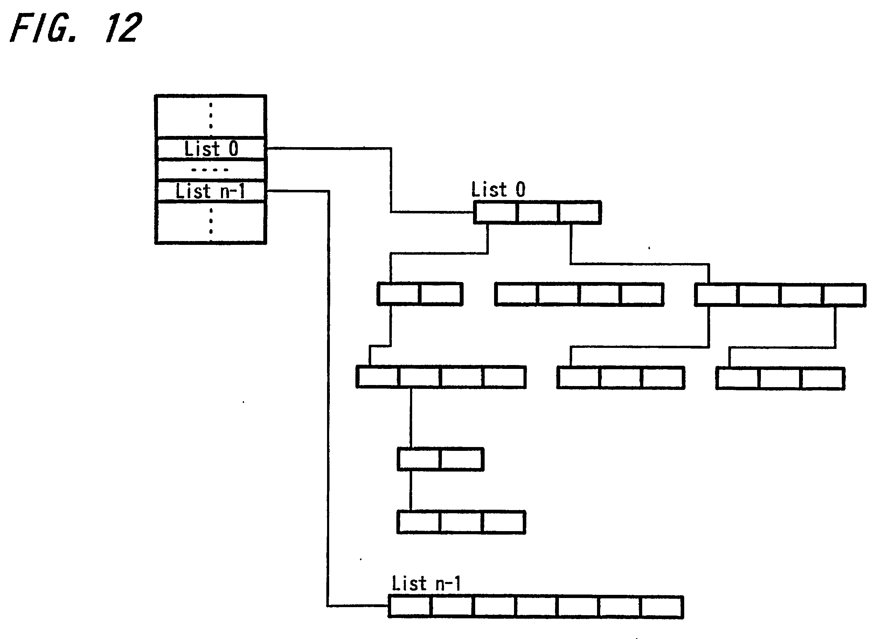

The data structure of Subunit Identifier Descriptor in an AV/C command used in the system of this embodiment will be described below with reference to FIGS. 12 to 15. FIG. 12 shows the data structure of the subunit identifier descriptor. As shown in FIG. 12, the data structure is constituted by the list of the hierarchical structure of the subunit identifier descriptor. The list represents a receivable channel in a tuner, and represents pieces of music recorded on a disk. The list of the uppermost position of the hierarchical structure is called a root list, and list 0 serves as a root for a lower list. Similarly, another list serves as a root list. There are root lists the number of which is equal to the number of objects. Here, when an AV-device connected to the device is a tuner, the object is each channel or the like in digital broadcast. All the lists of one hierarchy share common information.

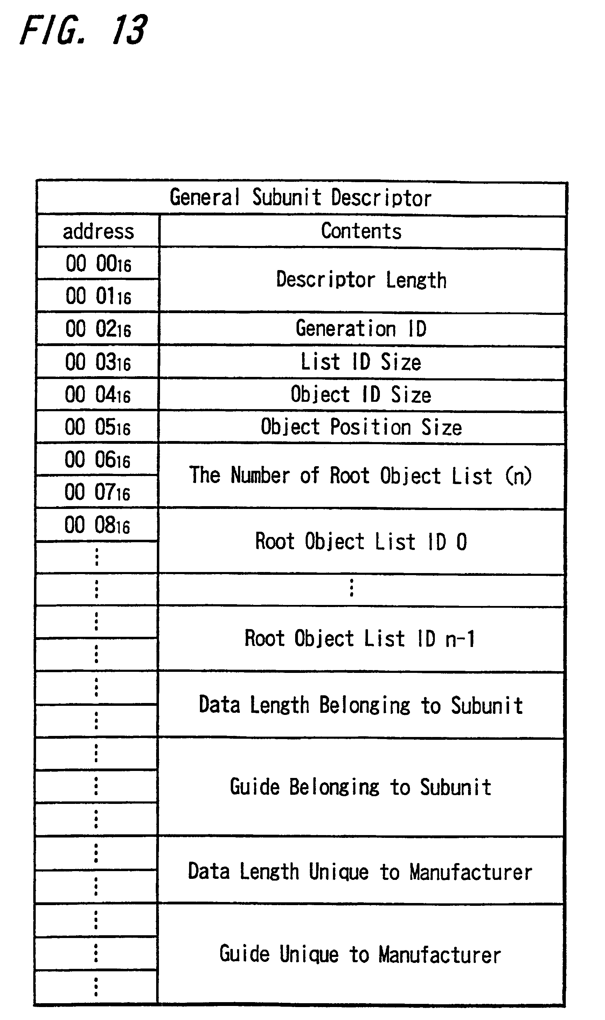

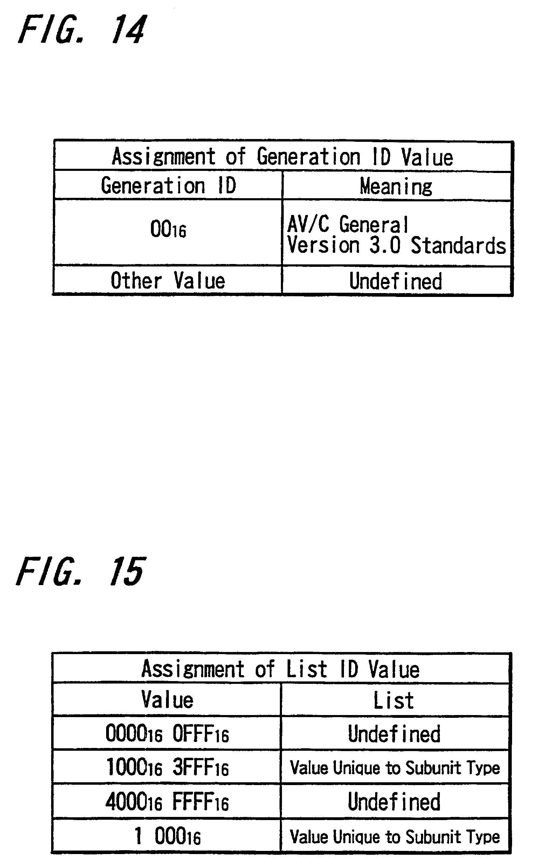

FIG. 13 shows a format of The General Subunit Identifier Descriptor. Attribute information related to a function is described in the descriptor. A descriptor length field does not include the value of the field itself. A generation ID represents the version of an AV/C command set. The value is, e.g., "00h" (h represents hexadecimal notation). In this case, "00h" means that, for example, as shown in FIG. 14, a data structure and a command are version 3.0 of AV/C General Specification. In addition, as shown in FIG. 14, in all the value except for "00h" are reserved and secured for a specification in the future.

A size of list ID represents the byte count of a list ID. A size of object ID represents the byte count of an object ID. A size of object position represents a position (byte count) in a list used for reference in control. The number of root object lists represents the number of root object lists. Root object request IDS represent IDs for identifying uppermost root object lists of independent hierarchies from each other.

A subunit dependent length belonging to a subunit represents a byte count of a data field (subunit dependent information field) field belonging to a subsequent subunit. The data field belonging to the subunit represents information inherent in a function. A manufacturer dependent length represents the byte count on a subsequent data (manufacturer dependent information) field unique to a manufacturer. The data unique to the manufacturer is a field representing specification information on a vender (manufacturer). When no data unique to the manufacturer is included in the descriptor, the field does not exist.

FIG. 15 shows an assignment range of the list ID shown in FIG. 13. As shown in FIG. 15, "0000h to 0FFFh" and "4000h to FFFFh" are reserved and secured as an assignment range for a specification in the future. "1000 to 3FFFh" and "1000h to the maximum value of list ID" are prepared to identity pieces of subordinate information on function types from each other.

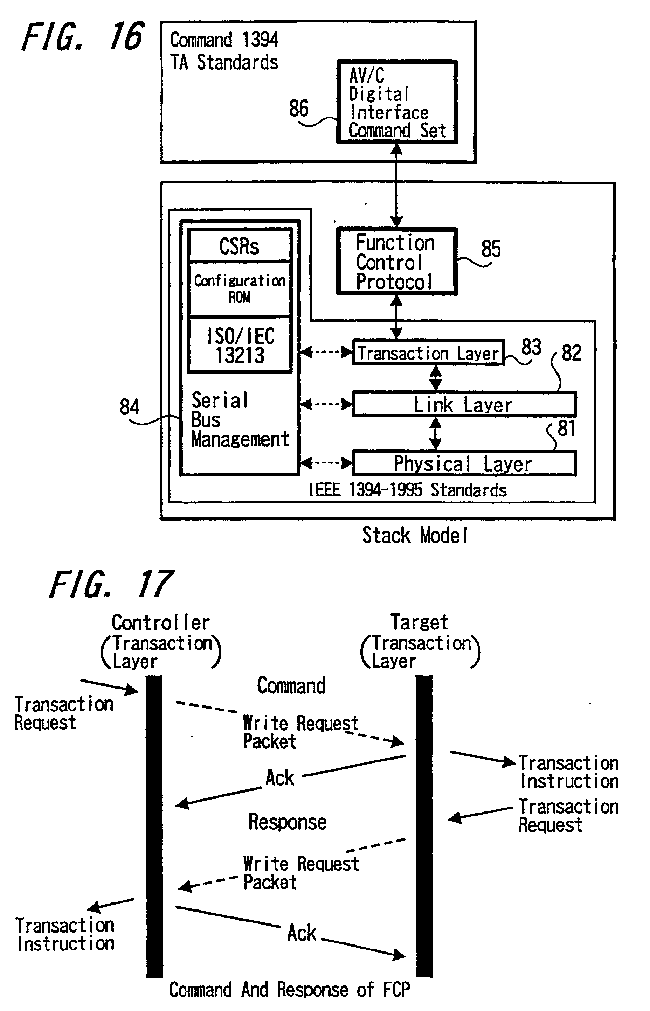

An AV/C command set used in the system of this embodiment will be described below with reference to FIGS. 16 to 21. FIG. 16 shows a stack model of the AV/C command set. As shown in FIG. 16, a physical layer 81, a link layer 82, a transaction layer 83, and a serial bus management 84 are referent to the IEEE 1394. An FCP (Function Control Protocol) 85 is referent to the IEC 61883. An AV/C command set 86 is referent to the 1394 TA spec.

FIG. 17 is a diagram for explaining a command and a response of the FCP 85 in FIG. 16. The FCP is a protocol for controlling devices (nodes) on an IEEE 1394 bus. As shown in FIG. 17, an object which performs control is a controller, and an object which is controlled is a target. Transmission or response of a command of the FCP is performed between nodes by using a light transaction of IEEE 1394 asynchronous communication. The target which receives data returns an acknowledge to the controller to perform reception check.

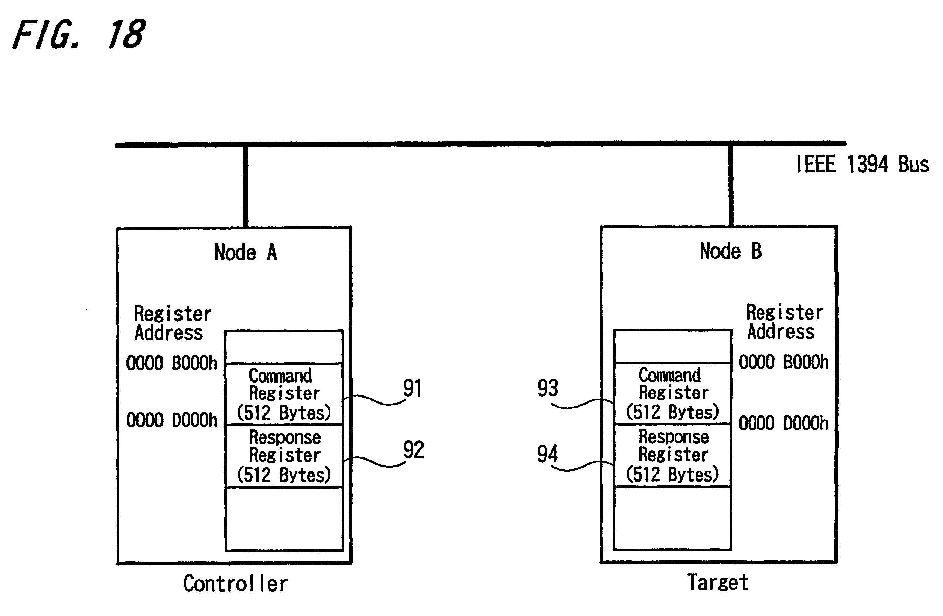

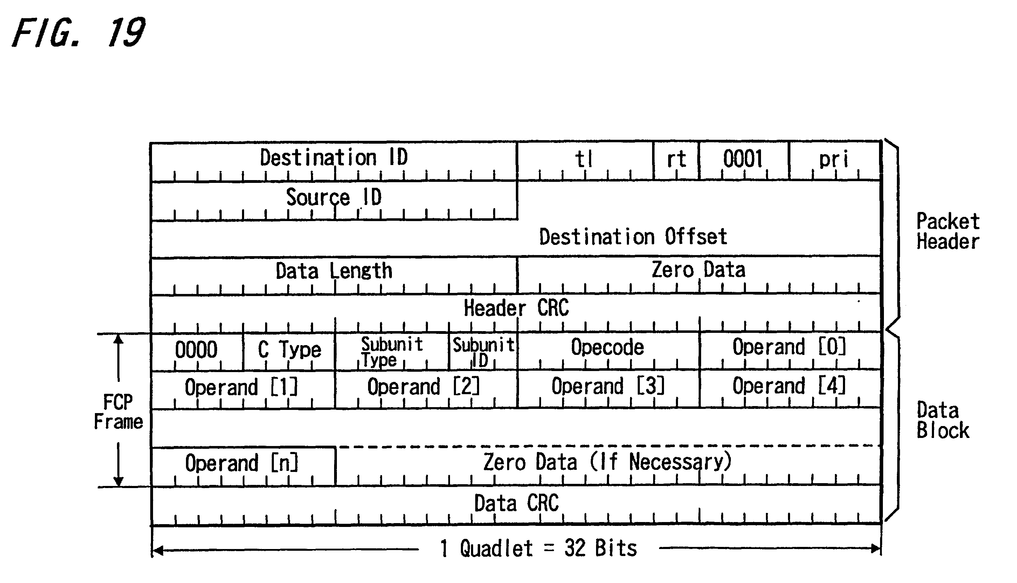

FIG. 18 is a diagram for more exactly explaining a relationship between the command and the response of the FCP shown in FIG. 17. A node A and a node B are connected to each other through an IEEE 1394 bus. The node A is a controller, and the node B is a target. For each of the node A and the node B, a command register of 512 bytes and a response register of 512 bytes are prepared. As shown in FIG. 18, the controller writes a command message in a command register 93 of the target to transmit an instruction. In contrast to this, the target writes a response message in a response register 92 of the controller to transmit a response. With respect to the two messages described above, control information is exchanged. The type of a command set transmitted by the FCP is described in a CTS in the data field in FIG. 19 (to be described later).

FIG. 19 shows the data structure of a packet transmitted in an asynchronous transfer mode of the AV/C command. An AV/C command set is a command set for controlling an AV-device, and is CTS (ID of a command set) = "0000". An AV/C command frame and a response frame are exchanged between nodes by using the FCP. In order to reduce a load on the bus and the AV-device, a response to a command is must be performed within 100 ms. As shown in FIG. 19, the data on the asynchronous packet is constituted by 32 bits (= 1 quadred) in the horizontal direction. The upper stage in FIG. 19 represents the header portion of the packet, and the lower stage in FIG. 19 represents a data block. A destination (destination ID) represents a destination.

When the command or the response of the AV/C command is transmitted, an FCP frame is arranged in a data block. A CTS arranged at the head portion of the FCP frame represents the ID of the command set, and satisfies CTS = "0000" in the AV/C command set. The field of ctype/response represents a function classification of commands when packets are commands, and the field represents processing results of commands.

The commands are roughly classified as four types, i.e., (1) a command for controlling a function from the outside (CONTROL), (2) a command for inquiring a status from the outside (STATUS), (3) a command for inquiring the presence/absence of a support of a control command (GENERAL INQUIRY (the presence/absence of a support of opcode) and SPECIFIC INQUIRY (the presence/absence of a support of opcode and operands), and (4) a command for requesting that a change in status be notified to the outside (NOTIFY).

The response is returned depending on the type of the command. As responses to a control (CONTROL) command, "not implemented" (NOT IMPLEMENTED)", "accepted" (ACCEPTED), "rejected" (REJECTED), and "interim" (INTERIM) known. As responses to a status (STATUS) command, "not implemented" (NOT IMPLEMENTED), "rejected" (REJECTED), "in transition" (IN TRANSITION), and "stable" (STABLE) are known. As responses to a command for inquiring the presence/absence of a support of a command from the outside (GENERAL INQUIRY and SPECIFIC INQUIRY), "implemented" (IMPLEMENTED) and "not implemented" (NOT IMPLEMENTED) are known. As responses to a command for requiring that a change in status is notified to the outside (NOTIFY), "not implemented" (NOT IMPLEMENTED), "rejected" (REJECTED), "interim" (INTERIM), and "changed" (CHANGED) are known.

A subunit type is set to specify a function in a device. For example, a tape recorder/player, a tuner, or the like is assigned to the subunit type. A BBS (Bulletin Board Subunit) which is a subunit used as a bulletin board for publishing information to other devices is also assigned to the subunit type. In order to perform discrimination when a plurality of subunits of the same type exist, addressing is performed by using subunit IDs as discrimination numbers. An opcode serving as a code of an operation represents a command, and an operand represents a parameter of the command. A field (additional operands) added as needed is prepared. Zero data or the like is added after the operands as needed. Data CRC (Cyclic Reduncy Check) is used to check an error in data transmission.

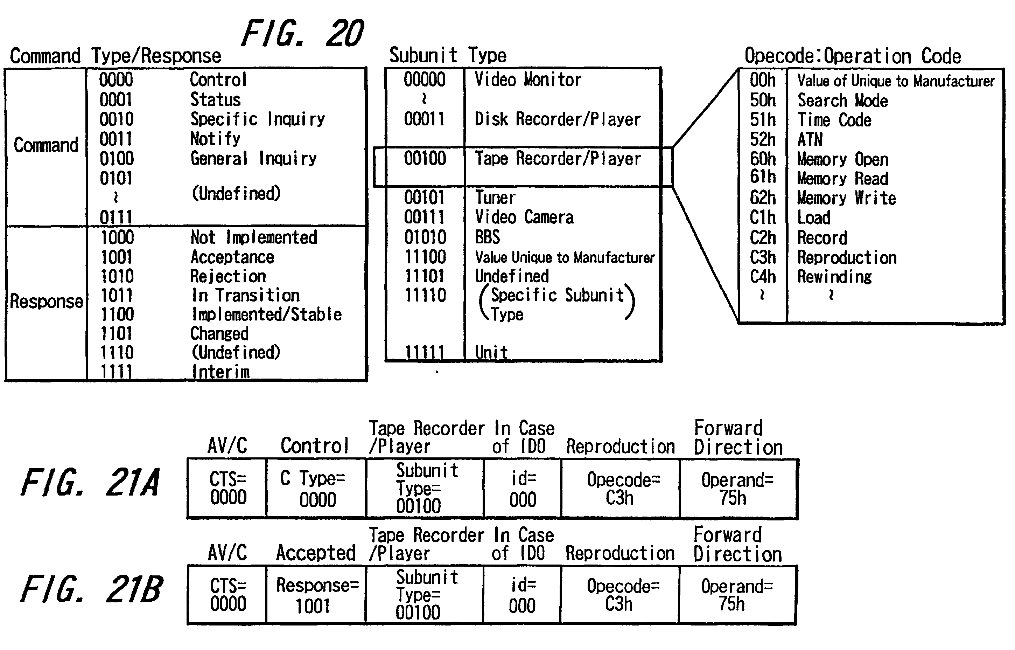

FIG. 20 shows a concrete example of an AV/C command. The left side in FIG. 20 represents a concrete example of the ctype/response. The upper stage in FIG. 20 represents a command, and the lower stage in FIG. 20 represents a response. Control (CONTROL) is assigned to "0000", status (STATUS) is assigned to "0001", specific inquiry (SPECIFIC INQUIRY) is assigned to "0010", notify (NOTIFY) is assigned to "0011", and general inquiry (GENERAL INQUIRY) is assigned to "0100". "0101 to 0111" are reserved and secured for a specification in the future. Not implemented (NOT IMPLEMENTED) is assigned to "1000", accepted (ACCEPTED) is assigned to "1001", rejected (REJECTED) is assigned to "1010", in transition (IN TRANSITION) is assigned to "1011", implemented/stable (IMPLEMENTED/STABLE) is assigned to "1100", changed (CHANGED) is assigned to "1101", and interim (INTERIM) is assigned to "1111". "1110" is reserved and secured for a specification in the future.

The center in FIG. 20 shows a concrete example of a subunit type. A video monitor is assigned to "00000", a disk recorder/player is assigned to "00011", a tuner is assigned to "00101", a video camera is assigned to "00111", a subunit used as a bulletin board called a BBS (Bulletin Board Subunit) is assigned to "01010", a subunit type (Vender unique) unique to a manufacturer is assigned to "11100", and a specific subunit type (Subunit type extended to next byte) is assigned to "11110". Although a unit is assigned to "11111", "11111" is used when data is transmitted to a device itself, e.g., when a power supply is turned on or off.

The right side in FIG. 20 shows a concrete example of an opecode (operation code: opcode). The table of the opecode exists for each subunit type. Here, the opcode is obtained when the subunit type is a tape recorder/player. An operand is defined for every opecode. In this case, a value (Vender dependent) unique to a manufacturer is assigned to "00h", a search mode is assigned to "50h", a time code is assigned to "51h", ATN is assigned to "52h", an open memory is assigned to "60h", memory read is assigned to "61h", memory write is assigned to "62h", load is assigned to "C1h", recording is assigned to "C2h", reproduction is assigned to "C3h", and rewinding is assigned to "C4h".

FIG. 21 shows a concrete example of an AV/C command and a response. For example, when reproduction instruction is made to a reproduction device serving as a target (consumer), a controller transmits a command as shown in FIG. 21A to the target. This command satisfies CTS = "0000" because the AV/C command set is used. Since a command (CONTROL) for controlling a device from the outside is used for ctype, ctype = "0000" is satisfied (see FIG. 20). Since the subunit type is a tape recorder/player, subunit type = "00100" is satisfied (see FIG. 20). Id represents a case of ID0, and satisfies id = 000. The opcode becomes "C3h" which means reproduction (see FIG. 20). The operand is "75h" which means forward (FORWARD). When reproduction is performed, the target returns a response shown in FIG. 21B to the controller. Here, since "accepted" is set in the response, response = "1001" is satisfied (see FIG. 20). Since FIG. 21B is the same as FIG. 21A except for the response, a description thereof will be omitted.

A data transmission state in IEEE 1394 buses 1 to 4 to which the device 100 to 500 are mutually connected will be described below. As has been described above, in a network system constituted by connecting the devices through the IEEE 1394 buses, the devices have independent node IDs. The node ID executes a resetting process when a device is newly connected to a bus or when a device is removed from a bus to make bus reset. When the node ID is set, a node unique ID serving as an ID inherent in each device is collected by the control of the cycle master described above.

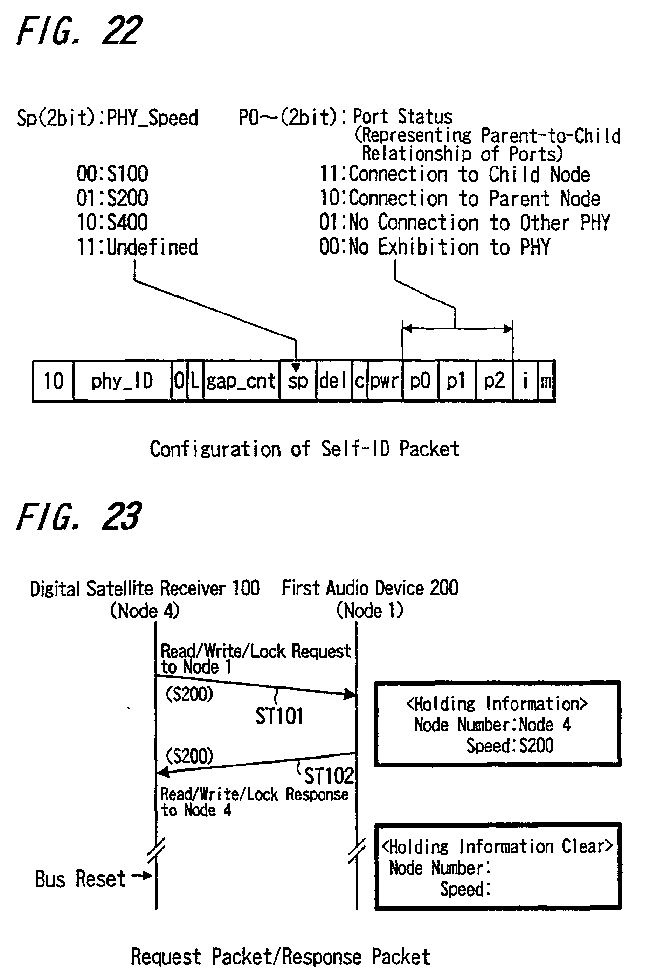

As a packet transmitted from each device in bus reset, a packet called a self-ID packet is known. FIG. 22 shows a configuration of the self-ID packet. In the self-ID packet, in addition to ID data inherent in each device for identifying the device, the data of a transmission speed corresponding to the device is arranged. In addition, the data of a port status representing the parent-to-child relationship of the ports is also arranged, so that topology information which is a connection state of a bus can be determined. In this embodiment, the digital satellite broadcast receiver 100 comprises a function of controlling communication to some extent on a bus (however, does not comprise the function of a device manager). The controller 11 comprises a function of collecting and holding data of the self-ID packet transmitted in bus reset. The other devices 200 to 500 do not comprise functions of collecting the data of self-ID packets.

Data (PHY SPEED) sp of a transmission speed in the self-ID packet is constituted by 2 bits, and represents any one of modes of three types, i.e., S100 mode, S200 mode, and S400 mode. Therefore, for example, when the digital satellite broadcast receiver 100 holds the data, it is understood that the other devices 200 to 500 connected to the buses correspond to specific transmission speeds, respectively.

An example in which data transmission is performed between the devices connected to the buses 1 to 4 will be described below. A process performed when audio data received by the digital satellite broadcast receiver 100 (node ID4) is transmitted to the first audio recording/reproducing device 200 (node ID1) to be recorded on a disk will be described below. In this example, as the highest transmission speed on the bus to which both the devices correspond, the digital satellite broadcast receiver 100 is set in S200 mode, and the audio recording/reproducing device 200 is set in S200 mode or S400 mode (the digital satellite broadcast receiver 100 and the audio recording/reproducing device 200 cope with a mode having a transmission speed lower than that of the S200 mode or the S400 mode).

FIG. 23 shows an example of a data transmission state between the digital satellite broadcast receiver 100 and the audio recording/reproducing device 200 in this case. The digital satellite broadcast receiver 100 serving as a device on a data transmission side transmits a request command (any one of commands of Read/Write/Lock) of an AV/C command to the first audio recording/reproducing device 200 (step ST101). The transmission at this time is performed in the S200 mode, and is performed in, e.g., an asynchronous transfer mode.

When the request command is received by the audio recording/reproducing device 200, a process of generating a response (any one of responses of Read/Write/Lock) corresponding to the request command to return the response to the digital satellite broadcast receiver 100 is performed (step ST102). At this time, since it is understood that the mode in which the audio recording/reproducing device 200 receives the request command is the S200 mode in step ST101, the data is transmitted to the digital satellite broadcast receiver 100 in the S200 mode.

In the audio recording/reproducing device 200, when data from the digital satellite broadcast receiver 100 is received in step ST101, S200 is set and held as a transmission speed data of the node ID4 representing the digital satellite broadcast receiver 100. This data is stored in a memory in, e.g., the controller 21. Thereafter, when data has to be transmitted from the audio recording/reproducing device 200 to the digital satellite broadcast receiver 100, the held data is read, and the transmission speed (i.e., S200 mode) of a mode represented by the read data is set.

As shown in FIG. 23, when bus reset occurs in the buses 1 to 4, transmission speed data of nodes stored in the audio recording/reproducing device 200 are erased. In this case, although data related to the digital satellite broadcast receiver 100 is stored by the audio recording/reproducing device 200, data related to transmission speeds of the devices connected to the buses can also be similarly stored by the audio recording/reproducing device 200 on the basis of the reception status of data transmitted from the corresponding devices. In a device connected to the bus except for the audio recording/reproducing device 200, similarly, data related to a transmission speed may be stored. An AV/C command and a response are write transactions to a command register or a response register of an FCP (Function Control Protocol) regulated by the IEC 61883.

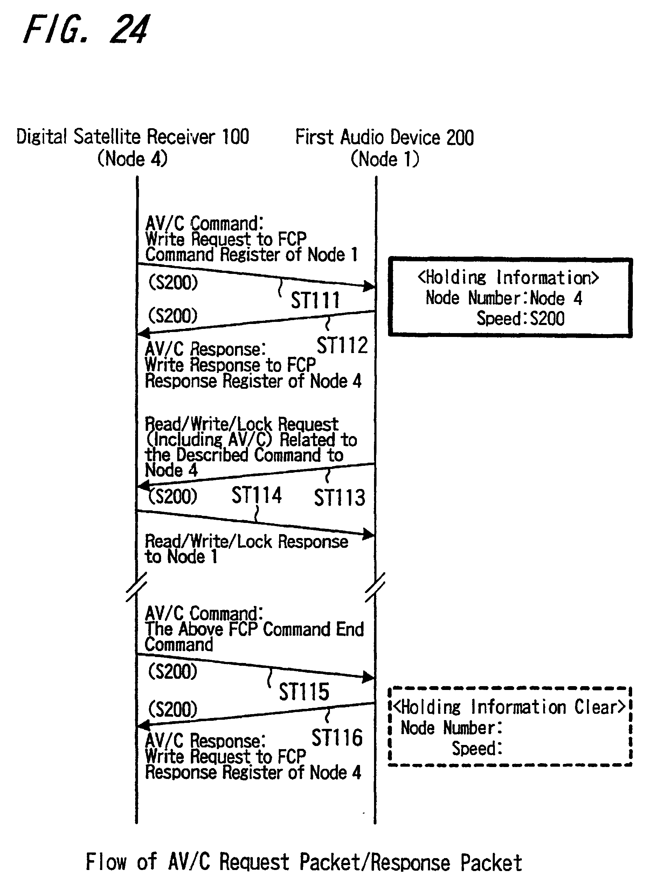

In the example shown in FIG. 23, only a command and a response are transmitted. However, other data may be transmitted in an asynchronous transfer mode. FIG. 24 shows an example in this case. For example, image data on a jacket or data on words appendant to audio data are transmitted from the digital satellite broadcast receiver 100 to the audio recording/reproducing device 200 in an asynchronous transfer mode. At this time, a write request (Write Request) of the AV/C command is transmitted from the digital satellite broadcast receiver 100 (node 4) to the audio recording/reproducing device 200 (node 1) at the transmission rate of the S200 mode (step ST111). In the audio recording/reproducing device 200, when this command is received, the data of a reception speed at this time is held as the speed data of the node ID4.

When the command is transmitted, the audio recording/reproducing device 200 transmits a write request (Write Request) of an AV/C response to the digital satellite broadcast receiver 100 (step ST112). A transmission speed at this time is set to be the transmission speed of the S200 mode equal to the reception speed in step ST111.

When a command (any one of requests of Read/Write/Lock) related to command transmission in steps ST111 and ST112 is transmitted from the audio recording/reproducing device 200 to the digital satellite broadcast receiver 100 (step ST113), the S200 mode is set on the basis of the held speed data to perform transmission. After transmission in step ST113, the response is transmitted from the digital satellite broadcast receiver 100 to the audio recording/reproducing device 200 (step ST114).

Upon completion of the transmission of required data as described above, when the end command of the FCP is transmitted by the AV/C command from the digital satellite broadcast receiver 100 to the audio recording/reproducing device 200 in the S200 mode (step ST115), a response of the command may be transmitted from the audio recording/reproducing device 200 to the digital satellite broadcast receiver 100 in the S200 mode (step ST116), and the speed data of the node ID4 held by the audio recording/reproducing device 20 may be erased. The erasing of the speed data may be performed only when the bus reset occurs as shown in FIG. 23.

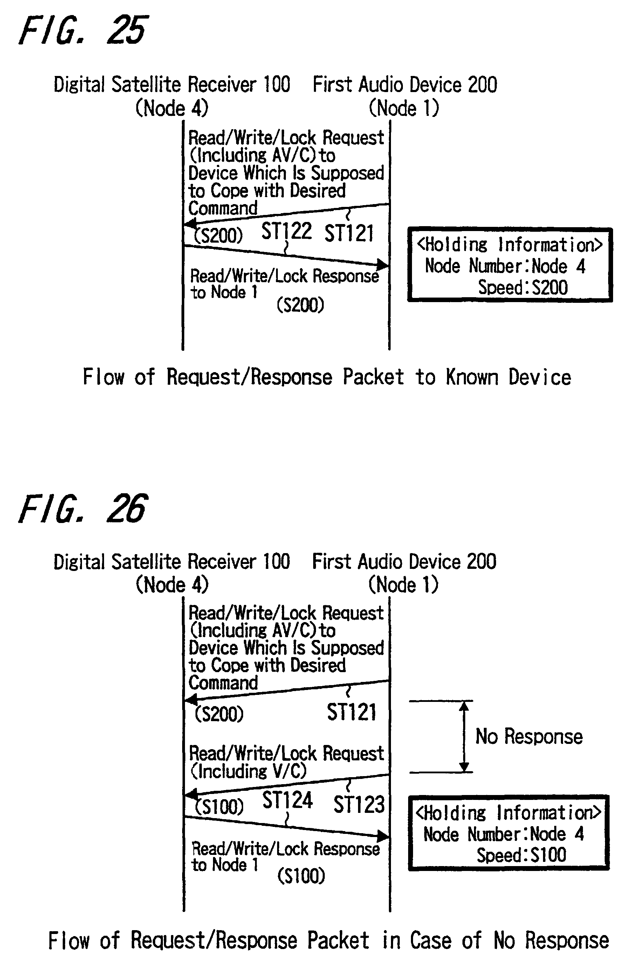

In the example described above, transmission is started from the digital satellite broadcast receiver 100 having a bus control function. However, in case of sending our a command for starting data transmission from the audio recording/reproducing device 200 to the digital satellite broadcast receiver 100 in the asynchronous transfer mode, the transmission may be started in a high-speed mode which can be set by the device on the transmission side without checking the corresponding data transmission speed. More specifically, for example, as shown in FIG. 25, when a command (any one of requests of Read/Write/Lock) such as an AV/C command is transmitted to a device (in this case, the digital satellite broadcast receiver 10) which is supposed to cope with a desired command (step ST121), the command is transmitted at the highest transmission speed (S200 mode) with which the audio recording/reproducing device 200 copes. When there is a response corresponding to the command (step ST122), the speed data of a communication destination (node ID4) at this time is set to be the speed data of the S200 mode and held in the audio recording/reproducing device 200. This held data is directly held until bus reset occurs.

When no response does not exist in transmission of the command from the audio recording/reproducing device 200 shown in FIG. 25, the transmission speed is set to be low, and the command may be transmitted again. More specifically, for example, as shown in FIG. 26, when a command (any one of requests of Read/Write/Lock) such as an AV/C command is transmitted from the audio recording/reproducing device 200 to a device such as the digital satellite broadcast receiver 100 which is supposed to cope with a desired command (step ST121), after the command is transmitted at the highest transmission speed (S200 mode) with which the audio recording/reproducing device 200 copes, it is determined that no response exist for a predetermined period of time. At this time, a mode (S100 mode) having a speed which is lower than the above speed by one step is set, and the command such as the AV/C command is transmitted again (step ST123). After the transmission of the command, when a response is transmitted from the corresponding device (step ST124), as the speed data of the corresponding node ID, the S100 mode which is the mode of the response is set.

When the transmission is performed in the asynchronous transfer mode as described above, in transmission of a response packet, the response packet is transmitted at the speed of the received packet. In request packet transmission, when a response speed of a transmission destination is known, by transmitting a request packet at the highest speed of both the devices, the packet can be exchanged at the highest speed, and in case no bus manager exists on the system, even with device having a relatively simple configuration (having the same configuration as that of each of many consumer devices) which cannot hold and manage the response speed capability or the like of the communication destination device by checking the response speed capability, the packet can be exchanged at the highest speed, and a large amount of data is transmitted in the asynchronous transfer mode. In this case, the communication resources of the buses can be effectively utilized. In addition, when a request packet is transmitted at an optimum speed from a device such as a controller having a capability of holding and managing the capability of the response speed of the destination device by checking the capability, the response packet can be returned at the speed. For this reason, similarly, the communication resources of the buses can be effectively utilized.

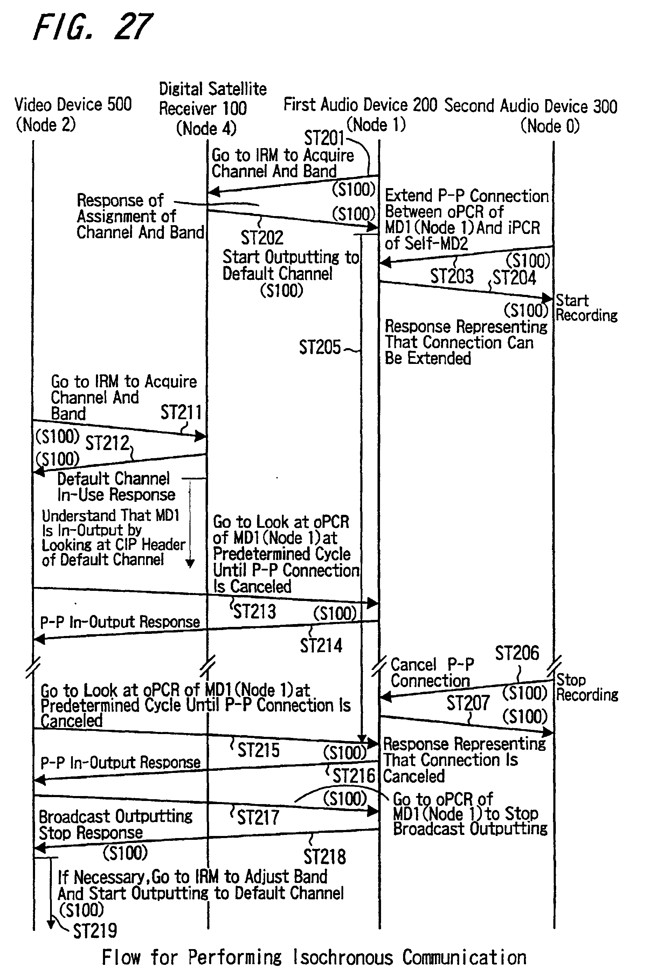

A case in which data transmission is performed in the isochronous transfer mode will be described below with reference to FIG. 27. Here, a dubbing process in which the first audio recording/reproducing device 200 transmits audio data reproduced from a disk to the second audio recording/reproducing device 300 through a bus to the second audio recording/reproducing device 300 to record the audio data on the disk is performed. When isochronous transfer is performed, one arbitrary device which can perform isochronous communication on a bus serves as an IRM (Isochronous Resource Manager). The IRM manages channels and bands for the isochronous transfer. Here, it is assumed that the digital satellite broadcast receiver 100 is the IRM.

In the data transmission process, transmission is performed by using an isochronous channel for broadcasting called a default channel (Default Channel). The default channel is a channel which can basically perform transmission from any device connected to the bus.

The first audio recording/reproducing device 200 transmits data for acquiring the channel and band of a default channel to the digital satellite broadcast receiver 100 serving as the IRM in the S100 mode which is the lowest transmission speed (step ST201). In this case, when the corresponding channel and the corresponding band can be acquired, a response related to assignment of the channel and the band is transmitted from the digital satellite broadcast receiver 100 to the first audio recording/reproducing device 200 (step ST202).

When the channel and the band are assigned, bidirectional transmission for extending point-to-point (p-p) connection is performed between an input plug control register (iPCR: Input Plug Control Register) of the second audio recording/reproducing device 300 which receives data transmitted by the channel and an output plug control register (oPCR: Output Plug Control Register) of the first audio recording/reproducing device 200 which transmits the data (steps ST203 and ST204) to count up a counter for p-p connection, and the connection in the corresponding channel and the corresponding band (i.e., communication from another device is prevented from being interrupted). Transmission for dubbing between both the audio recording/reproducing devices is protected, and reproduction from the disk is performed by the first audio recording/reproducing device 200. At the same time, outputting of reproduced audio data is started by the default channel (step ST205), and recording on the disk is started by the second audio recording/reproducing device 300.

The output plug control register (oPCR) has the configuration shown in FIG. 10B described above, and the input plug control register (iPCR) has the configuration shown in FIG. 10D described above. A counter for p-p connection required to extend p-p connection is set.

Upon completion of recording, a request that ptop connection is canceled is performed from the second audio recording/reproducing device 300 to the first audio recording/reproducing device 200 (step ST206). When the connection is canceled, a response representing that the connection is canceled is transmitted from the first audio recording/reproducing device 200 to the second audio recording/reproducing device 300 (step ST207). All the transmissions on the bus up to this are performed in the S100 mode.

In this case, when dubbing is performed by extending p-p connection, it is assumed that a request that video data reproduced by the video recording/reproducing device 500 of the node ID2 should be transmitted to the default channel is generated. At this time, the video recording/reproducing device 500 transmits data for acquiring a channel and a band to the digital satellite broadcast receiver 100 serving as the IRM in the S100 mode (step ST211). When this request is generated, the IRM returns a response indicating that the default channel is being used, or busy to the video recording/reproducing device 500 (step ST212).

When this response is generated, the video recording/reproducing device 500 receives data transmitted by the default channel and looks at a common isochronous packet header (Common Isochronous Packet Header: CIP header) of the data to determine a device on the transmission side on the basis of a source node ID included in the CIP header.

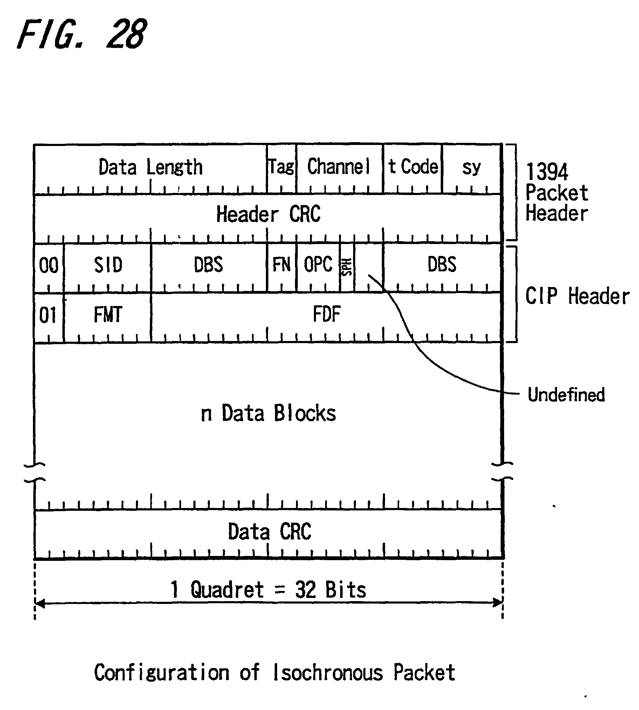

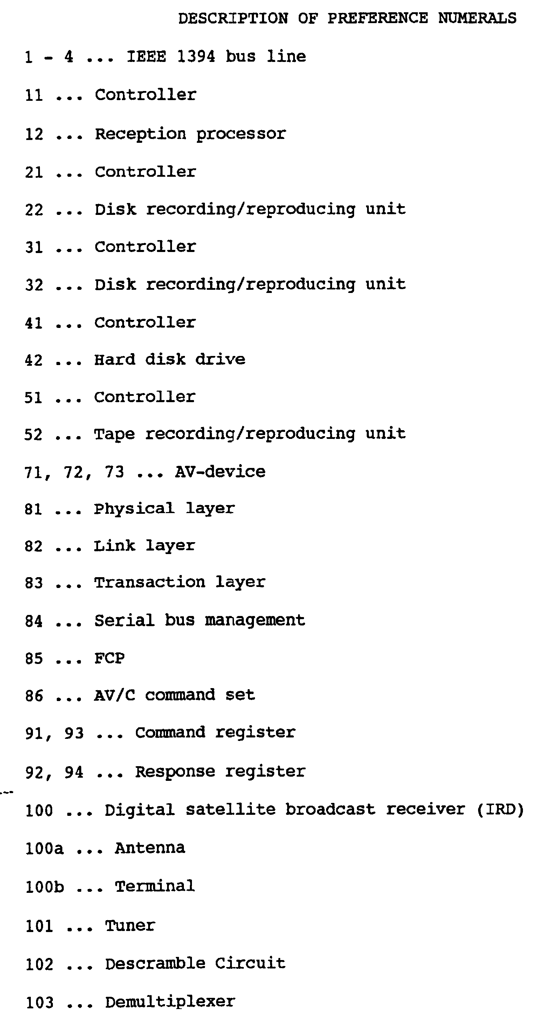

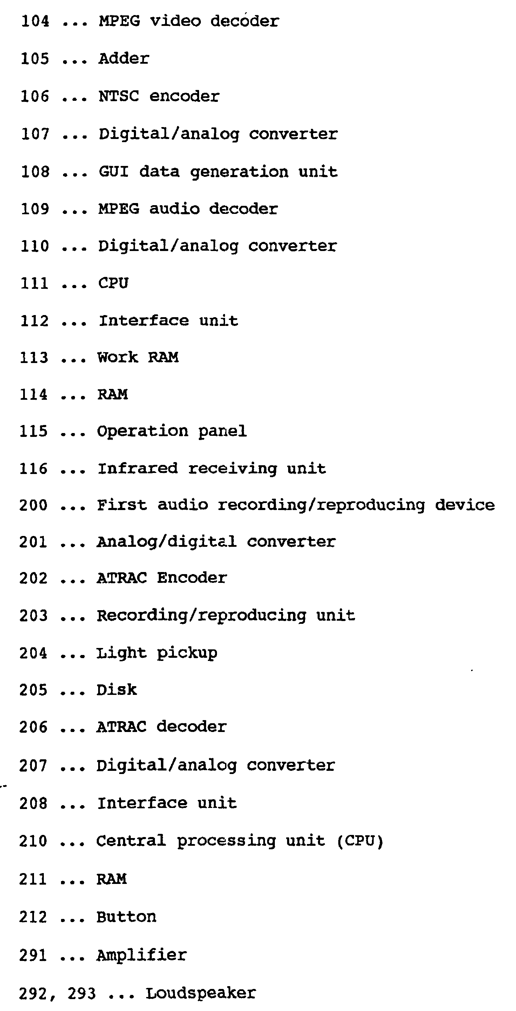

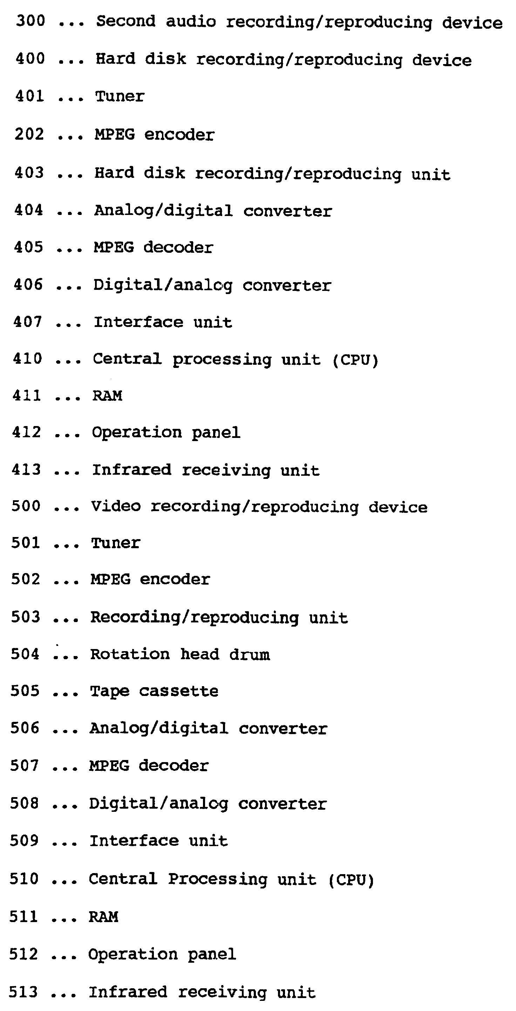

FIG. 28 is a diagram showing an example of the configuration of a packet for isochronous transfer including a CIP header. In the packet for isochronous transfer, a packet header regulated by the IEEE 1394 is arranged in a 2-quadred section (64 bits) at the head. The CIP header is arranged in the subsequent 2-quadred section. In the packet header, a data length, a tug, a channel, a t code, synchronous data sy, and header CRC are arranged. In a CIP header arranged in the section subsequent to the packet header, a source node ID (SID) which is a transmission node number, a data block size (DBS) representing a packeting unit, a fraction number (FN) representing the number of divisions in packeting, a quadred padding count (QPC) representing a quadred count added for division, a source packet header (SPH) representing the flag of the header of the source packet, a data block counter (DBC) which is a counter for detecting a lack of the packet, a format ID (FID) representing the format of a signal to be transmitted, and a format dependent field (FDF) depending on a format are arranged. Subsequent to the CIP header, n (n is an arbitrary number) data blocks are arranged. Finally, data CRC which is an error detection code for data in the data block is arranged.

As the data of the format dependent field (FDF) in the CIP header, in addition to data related to a format, time stamp data which is time information may be added.

When the isochronous packet constituted as described above is received, the data of the CIP header is determined, e.g., the data of the SID which is the source node ID is determined, so that a specific device which transmits data can be understood.

Returning to the description of FIG. 27, when the video recording/reproducing device 500 determines a transmission source of a default channel, the video recording/reproducing device 500 goes to read an output plug control register (oPCR) of the first audio recording/reproducing device 200 which is the determined transmission source (step ST213), and an answer of the data of the register (step ST214) is determined by the video recording/reproducing device 500. In this case, it is understood from the data of the register that p-p connection is extended, and it is understood that output rights to the default channel cannot be removed. Therefore, reading of the register in steps ST213 and ST214 is repeated in a predetermined cycle until it is detected that the p-p connection is canceled.

Upon completion of transmission of audio data using the default channel in step ST205, it is assumed that the video recording/reproducing device 500 goes to read the output plug control register (oPCR) of the first audio recording/reproducing device 200 (step ST 215) to detect, from the response, that the p-p connection is canceled (step ST216). At this time, when an instruction that broadcast outputting to the default channel be stopped is transmitted to the output plug control register of the first audio recording/reproducing device 200 (step ST217), and when an answer for that the broadcast outputting be stopped on the basis of the instruction is received (step ST218), the video recording/reproducing device 500 performs the process of acquiring a channel and a band to the digital satellite broadcast receiver 100 serving as the IRM, and outputting in the acquired default channel is started (step ST219). Data output onto the bus is received by, e.g., the hard disk device 400 to be recorded on the hard disk, or a process of receiving the data by a receiver (not shown) to display the data can be performed. All the transmission speeds of the data transmitted and received by the video recording/reproducing device 500 in steps ST211 to ST219 are equal to that of the S100 mode.

In this manner, isochronous transfer is performed by using the default channel to use the S100 mode having the lowest speed as a transmission speed, and this mode is a mode in which transmission and reception can be performed in any device connected to the bus. A transmission state in the default channel can be determined by any device on the bus on the basis of a header or the like. For example, if the video recording/reproducing device 500 is a device which copes with only transmission in the S100 and performs transmission between the two devices 400 and 500 in the S200 mode, the video recording/reproducing device 500 cannot judge the ID of a device or the like which outputs data to the default channel in transmission between the two devices 400 and 500. The video recording/reproducing device 500 waits until the default channel and the band are returned to the IRM, long time is required until transmission by the default channel can be performed, and the process is also complicated. In this example, all the device connected to the bus can perform connection control such as rapid removal of the channel rights according to a predetermined connection rule.

In the embodiment described above, the network constituted by the IEEE 1394 bus has been described above. However, the present invention can also be applied to a case in which data transmission is performed by other networks having plural types of communication speeds. As devices connected to the network, various electronic devices, for inputting or outputting data, except for the broadcast receiver, the audio recording/reproducing device, the video recording/reproducing device, and a hard disk device which are described above can be applied.

## Claims

1. A communication method for performing communication between devices which are connected through a digital communication control bus in which plural types of communication speeds are established, wherein,
when communication is performed between the devices connected through the digital communication control bus, after a predetermined packet is received, a communication speed of a response packet transmitted to a transmission source of the predetermined packet is set to be a communication speed of the predetermined packet.

2. The communication method according to claim 1, wherein
communication on the digital communication control bus is executed without providing a device serving as a bus manager.

3. The communication method according to claim 1, wherein,
in transmission of a request packet which can be received by an unspecified device connected through the digital communication control bus, the lowest communication speed of the prepared communication speeds is set.

4. The communication method according to claim 1, wherein,
when there is data related to a communication speed of a destination which performs communication, a highest communication speed at which communication is performed with the destination is set on the basis of the data to transmit a request packet.

5. The communication method according to claim 4, wherein,
when the digital communication control bus is reset, the data related to the communication speed is erased.

6. A communication method for performing communication between devices which are connected through a digital communication control bus in which plural types of communication speeds are established wherein,
in communicating a request packet which can be received by an unspecified device connected through the digital communication control bus, the lowest communication speed of the prepared communication speeds is set.

7. The communication method according to claim 6, wherein
a process of plundering packet transmission rights can be performed by the device which receives the request packet.

8. A communication system in which communication can be performed between a plurality of communication devices connected through a predetermined digital communication control bus in which plural types of communication speeds are established, comprising:
as a first communication device connected to the digital communication control bus,
communication means which performs transmission and reception of a packet through the digital communication control bus and which can perform the transmission and the reception at a limited communication speed of the plural types of communication speeds;
as a second communication device connected to the digital communication control bus,
communication means which performs transmission and reception of a packet through the digital communication control bus and which can perform the transmission and the reception at the plural types of communication speeds; and
control means which judges a communication speed of a packet received from the first communication device by the communication means to set the transmission speed of a response packet to the first communication device with respect to the received packet at the judged communication speed.

9. The communication system according to claim 8, wherein
communication between the first communication device and the second communication device through the digital communication control bus is executed without providing a device serving as a bus manager.

10. The communication system according to claim 8, wherein,
when a request packet which can be received by an unspecified device connected through the digital communication control bus is transmitted from the communication means, the control means of the second communication device sets the lowest communication speed out of the prepared communication speeds.

11. The communication system according to claim 8, wherein,
when data related to a communication speed of the first communication device is stored in the control means of the second communication device, a highest communication speed at which communication can be performed with the first communication device on the basis of the stored data is set, and the communication means transmits a request packet.

12. The communication system according to claim 11, wherein
the control means of the second communication device erases the storage of the data related to the communication speed when the digital communication control bus is reset.

13. A communication system which can perform communication between a plurality of communication devices connected through a digital communication control bus in which plural types of communication speeds are prescribed, comprising:
as a first communication device connected to the digital communication control bus,
communication means which performs transmission and reception of a packet through the digital communication control bus and which can perform the transmission and the reception at the plural types of communication speeds; and
control means which sets the lowest communication speed of a packet received from the first communication device of prepared communication speeds when a request packet which can be received by an unspecified device connected through the digital communication control bus is transmitted from the communication means.

14. The communication system according to claim 13, wherein
a process of plundering packet transmission rights is executed by the second communication device which receives the request packet transmitted from the communication means of the first communication device.

15. An electronic device which can perform communication with a destination connected to a predetermined digital communication control bus in which plural types of communication speeds are prescribed, comprising:
communication means which performs transmission and reception of a packet through the digital communication control bus and which can perform the transmission and the reception at the plural types of communication speeds; and
control means which judges a communication speed of a packet received by the communication device to set the transmission speed of a response packet with respect to the received packet at the determined communication speed.

16. The electronic device according to claim 15, wherein
when a request packet which can be received by an unspecified device connected through the digital communication control bus is transmitted from the communication means, the control means sets the lowest communication speed out of the prepared communication speeds.

17. The electronic device according to claim 15, wherein,
when data related to a communication speed of a destination which performs communication is stored in the control means, a highest communication speed at which communication can be performed with the destination on the basis of the stored data is set, and the communication means transmits a request packet.

18. The electronic device according to claim 17, wherein,
when the control means detects that the digital communication control bus is reset, the control means erases stored data related to the communication speed.

19. An electronic device which can perform communication with a destination connected to a predetermined digital communication control bus in which plural types of communication speeds are prescribed, comprising:
communication means which performs transmission and reception of a packet through the digital communication control bus and which can perform the transmission and the reception at the plural types of communication speeds; and
control means which sets the lowest communication speed of the prepared communication speeds when a request packet which can be received by an unspecified device connected through the digital communication control bus is transmitted from the communication means.
